# EUROPÄISCHE PATENTSCHRIFT

(11) **EP 3 060 825 B1**
(45) Veröffentlichungstag und Bekanntmachung des Hinweises auf die Patenterteilung: **24.02.2021**
(21) Anmeldenummer: 14789771.4
(22) Anmeldetag: 22.10.2014
(51) Int. Cl.: F16D 65/12

(54) **VERBUNDBREMSSCHEIBE SOWIE VERFAHREN UND VORRICHTUNG ZUR HERSTELLUNG DERSELBEN**
COMPOSITE BRAKE DISC AND METHOD AND DEVICE FOR PRODUCING SAME
DISQUE DE FREIN COMPOSITE AINSI QUE PROCÉDÉ ET DISPOSITIF POUR LE FABRIQUER

(30) Priorität: 23.10.2013 CH 17922013; 27.12.2013 CH 21512013
(43) Veröffentlichungstag der Anmeldung: 31.08.2016
(73) Patentinhaber: Ernst Grob AG, 8708 Maennedorf (CH)
(72) Erfinder: DÉRIAZ, Daniel, CH-8706 Meilen (CH)
(74) Vertreter: Frei Patent Attorneys
(86) Internationale Anmeldenummer: PCT/CH2014/000156
(87) Internationale Veröffentlichungsnummer: WO 2015/058314

(56) Entgegenhaltungen:
- DE-A1- 10 125 111
- DE-A1- 10 206 567
- DE-B3-102010 055 973
- US-A- 5 568 846
- US-A- 6 035 978

## Beschreibung

Die Erfindung bezieht sich auf Bremsscheiben, genauer auf Verbundbremsscheiben, sowie auf Verfahren und Vorrichtungen zum Herstellen von Verbundbremsscheiben. Sie bezieht sich auf Verbundbremsscheiben, Vorrichtungen und Verfahren gemäss dem Oberbegriff der unabhängigen Patentansprüche. Verbundbremsscheiben finden Anwendungen, z.B. im Fahrzeugbau, insbesondere im Kraftfahrzeugbau.

Verbundbremsscheiben finden mehr und mehr Anwendung vor allem im Kraftfahrzeugbau, da sie eine geringer Masse als herkömmliche Bremsscheiben haben können und weil sie wirtschaftlicher fertigbar sein können als herkömmliche Bremsscheiben.

Wie beispielsweise in WO 2010/102704 A1 dargelegt, kann eine Verbundbremsscheibe einen Bremsscheibentopf aus Blech, insbesondere Stahlblech, und einen Bremsring aus Gusseisen aufweisen und sogar im wesentlichen aus diesen zwei Teilen bestehen.

Ein Bremsscheibentopf weist meist einen rohrförmigen Abschnitt und einen daran anschliessenden Bodenteil auf oder besteht aus diesen zwei Teilen, wobei ein Bremsscheibentopf meist einstückig ausgebildet ist.

Der Bremsring wird manchmal auch als Reibring bezeichnet. Ein Bremsmoment, das bei einem Bremsvorgang am Bremsring entsteht, wird vom Bremsring auf den Bremsscheibentopf übertragen, z.B. über entsprechende Profilierungen oder Verzahnungen in Bremsring und Bremsscheibentopf, genauer in dem rohrförmigen Abschnitt des Bremsscheibentopfes, so dass es auch auf den Bodenteil des Bremsscheibentopfes übertragen wird, von wo aus das Bremsmoment, typischerweise über Schraubenbolzen, auf Radnaben von Fahrzeugrädern geleitet werden kann.

In der genannten WO 2010/102704 A1 wird vorgeschlagen, einen mit einer Innen- und Aussenverzahnung versehenen Bremsscheibentopf durch Kaltumformen zu erstellen und dann in einen Bremsring einzupressen, der eine passende (komplementäre) Innenverzahnung aufweist. Zur axialen Ausrichtung von Bremsring und Bremsscheibentopf ist eine Lasche am Bremsscheibentopf vorgesehen, die aus dem Bremsscheibentopf ausgestanzt und dann umgebogen wird.

Weiterhin ist aus DE 19830666 A1 aus bekannt, Verbundbremsscheiben mittels Innenhochdruckumformung herzustellen.

Aus DE102010055973 B3 ist eine Verbundbremsseheibe bekannt, mit einem Bremsscheibentopf und einem zu diesem koaxial angeordneten Reibring. Eine äussere Mantelfläche des Bremsscheibentopfes weist ein Zahnprofil auf, welches zur Drehmomentübertragung in ein komplementäres Zahnprofil einer inneren Mantelfläche des Reibrings eingreift. Der Bremsscheibentopf ist durch radiale Verprägungen, welche in korrespondierende Aufnahmen des Reibrings eingreifen, axial gesichert, wobei die Aufnahmen für die Verprägungen als Nuten im Zahnprofil des Reibrings ausgebildet sind. Zur Herstellung der Verbindung wird zunächst der Bremsscheibentopf axial in den Reibring eingepresst. Dann wird mittels radial angeordneter, beweglich aufgenommener Stempel eine Verprägung zwischen den Nuten und der Mantelwandung des Bremsscheibentopfes erzeugt, indem die Stempel, angetrieben durch eine Axialbewegung eines konischen Stempels, radial nach aussen gepresst werden. Die Mantelwandung wird so im Bereich jedes zweiten Zahnes der Verzahnung zwischen Reibring und Bremsscheibentopf verformt.

US6035978 A beschreibt eine Verbundbremsscheibe, bei der ein Halteteil (Bremsscheibentopf) durch plastische Verformung mit dem Bremsring verbunden wird. Dabei sind auf dem Umfang des Halteteils verteilte Ausprägungen vorgesehen, die mittels eines von innen angreifenden Prägewerkzeugs durch eine einfache, radial von innen nach aussen gerichtete Bewegung des Prägewerkzeugs erzeugt werden können. In einer Ausführungsform weist der Bremsring zwei Teilringe auf, die mittels Stegen miteinander verbunden sind, wobei zwischen den Stegen Hohlräume gebildet sind. Die Ausprägungen des Bremsscheibentopfes greifen in die Hohlräume ein, was zu einer rotatorischen Befestigung des Bremsscheibentopfes an dem Bremsring führen soll. Zusätzlich liegen die Ausprägungen noch innen an den beiden Teilringen an, was einer axialen Fixierung dienen soll.

DE10206567 A1 betrifft ein Verfahren zum Umformen eines topfförmigen Formkörpers im Bereich seiner Wandung, zur formschlüssigen Verbindung eines ringförmigen Bremsscheibenkörpers mit dem als Tragkörper dienenden Formkörper. Das Umformen erfolgt dabei durch Innenhochdruck.

DE10125111 A1 D4 betrifft eine Verbundbremsscheibe mit Reibring und Halteteil, die verzahnt sind, wobei als Axialsicherung ein Sicherungsring vorgesehen ist, der in einer Nut im Reibring oder Halteteil sitzt.

US5568846 A betrifft keine Verbundbremsscheibe. sondern eine Radnabe und Bremsscheibenanordnung für ein Fahrzeugrad und genauer die Verbindung zwischen der Radnabe und der Bremsscheibe.

Es ist eine Aufgabe der Erfindung, ein neues Verfahren zur Herstellung von Verbundbremsscheiben und entsprechende Verbundbremsscheiben und Bremsringe zu schaffen sowie eine entsprechende Vorrichtung zur Herstellung von Verbundbremsscheiben und eine Verwendung dieser Vorrichtung. Weiter sollen ein neues Verfahren zur Herstellung eines Rades für ein Fahrzeug und auch ein mit einer erfindungsgemässen Verbundbremsscheibe versehenes Fahrzeug geschaffen werden. Eine weitere Aufgabe der Erfindung ist, die Wirtschaftlichkeit der Herstellung von Verbundbremsscheibe zu verbessern, wobei insbesondere Verfahrensschritte, die anderenfalls nötig werden, nicht ausgeführt zu werden brauchen und/oder eine geringere Anzahl verschiedener Prozesse durchzuführen sind.

Eine weitere Aufgabe der Erfindung ist, Verbundbremsscheiben mit einem besonders guten Planlauf bereitzustellen.

Eine weitere Aufgabe der Erfindung ist, Verbundbremsscheiben bereitzustellen, die eine besonders gute gegenseitige axiale Befestigung von Bremsring und Bremsscheibentopf aufweisen.

Eine weitere Aufgabe der Erfindung ist, Verbundbremsscheiben bereitzustellen, die eine besonders gute gegenseitige rotatorische Befestigung von Bremsring und Bremsscheibentopf aufweisen und eine gute Drehmomentübertragung zwischen diesen ermöglichen.

Eine weitere Aufgabe der Erfindung ist, ein Verfahren bereitzustellen, bei dem durch Verfahrensparameter wählbar ist, ob ein Spiel einer gegenseitigen rotatorischen Befestigung von Bremsring und Bremsscheibentopf vorhanden sein soll und wie gross dies sein soll, insbesondere wobei dies in reproduzierbarer Weise wählbar ist.

Eine weitere Aufgabe der Erfindung ist, ein Verfahren bereitzustellen, bei dem durch Verfahrensparameter wählbar ist, ob eine Vorspannung zwischen Bremsring und Bremsscheibentopf vorhanden sein soll und wie gross dies sein soll, insbesondere wobei dies in reproduzierbarer Weise wählbar ist.

Mindestens eine dieser Aufgaben wird zumindest teilweise durch Vorrichtungen, Verfahren und Verwendungen gemäss den Patentansprüchen gelöst.

Bei dem Verfahren zur Herstellung einer Verbundbremsscheibe, die einen Bremsscheibentopf und einen Bremsring mit einer Innenprofilierung aufweist, wird ein in den Bremsring eingebrachter Bremsscheibentopfrohling mittels mindestens eines Prägewerkzeugs in die Innenprofilierung eingeformt.

Insbesondere kann zumindest ein rohrförmiger Abschnitt des Bremsscheibentopfrohlings mittels des mindestens einenPrägewerkzeugs in die Innenprofilierung eingeformt werden.

Auf diese Weise kann kaltumformend, insbesondere spanlos, durch plastisches (und teilweise auch elastisches) Umformen des Bremsscheibentopfrohlings ein Verbundelement, nämlich die Verbundbremsscheibe, erstellt werden. Nach Abschluss des Einformens ist aus dem Bremsscheibentopfrohling der Bremsscheibentopf geworden, und die zwei zuvor separaten Teile Bremsring und Bremsscheibentopfrohling sind aneinander fixiert, genauer: ineinander gefügt.

Zumeist besteht die Verbundbremsscheibe im wesentlichen aus dem Bremsring und dem Bremsscheibentopf.

Das Einformen beinhaltet normalerweise ein lokales Umformen des Bremsscheibentopfrohlings im Bereich der Innenprofilierung. Es kann gegebenenfalls auch ein Umformen des Bremsrings, genauer: dessen Innenprofilierung, beinhalten, wobei das Umformen des Bremsrings je nach Material des Bremsrings sehr geringfügig sein kann, wie es z.B. im Falle von Gusseisen typisch sein kann, oder auch nennenswert sein kann, wie es z.B. im Falle von Stahl typisch sein kann.

Durch das Einformen kann eine Verdrehsicherung / Verdrehfestigkeit zwischen Bremsring und Bremsscheibentopf erzeugt werden. Es wird also durch das Einformen bewirkt, dass der Bremsscheibentopf nicht mehr, oder nur durch sehr grossen Kraftaufwand, insbesondere nur durch Kräfte, die solche Kräfte übersteigen, wie sie bei Bremsvorgängen auftreten können, gegenüber dem Bremsring in nennenswerter Weise gedreht werden kann (ein geringes rotatorisches Spiel kann vorgesehen sein). Insbesondere entsteht durch das Einformen eine Vielfachverkeilung zwischen Bremsscheibentopf und Bremsring.

Dadurch kann eine gute Drehmomentübertragung zwischen Bremsring und Bremsscheibentopf erreicht werden.

Die Innenprofilierung kann insbesondere eine verzahnungsartige Innenprofilierung oder ein innenliegendes Zahnprofil sein. Die Innenprofilierung kann eine Vielzahl von Zahnfüssen und Zahnköpfen beinhalten. Die Innenprofilierung kann insbesondere eine Innenverzahnung sein, die zudem typischerweise eine Geradverzahnung ist.

Eine Drehmomentübertragung kann insbesondere über Zähne der Innenprofilierung des Bremsrings und Zähne der im Bremsscheibentopf erzeugten Profilierung erfolgen.

Das Einformen findet typischerweise über die gesamte Breite der Innenprofilierung, also über die gesamte achsenparallele Erstreckung der Innenprofilierung statt.

Während des Verfahrens wird der Bremsscheibentopfrohling von innen bearbeitet. Das mindestens eine Prägewerkzeug bearbeitet den Bremsscheibentopfrohling von innen, also von der dem Bremsring abgewandten Seite her.

Als Prägewerkzeuge kommen insbesondere Prägestempel in Frage.

Ein Prägewerkzeug hat einen Wirkbereich, in welchem es mit dem Bremsscheibentopfrohling zusammenwirkt, wenn das Prägewerkzeug mit dem Bremsscheibentopfrohling in Eingriff ist. Dieser Wirkbereich kann so ausgebildet sein, dass das Prägewerkzeug nur in eine einzige Profillücke oder Zahnlücke der Innenprofilierung eindringt, wenn es mit dem Bremsscheibentopfrohling in Eingriff ist. Es ist aber auch möglich, das Prägewerkzeug so auszubilden, dass es in mehrere, insbesondere mehrere benachbarte Profillücken oder Zahnlücken der Innenprofilierung eindringt, wenn es mit dem Bremsscheibentopfrohling in Eingriff ist. Zum Beispiel könnte der Wirkbereich zwei zueinander parallele axial erstreckte radiale Vorsprünge aufweisen, z.B. zum gleichzeitigen Umformen des Bremsscheibentopfrohlings in den Bereichen zweier benachbarter Profillücken der Innenprofilierung, so dass sich dort gleichzeitig entsprechende Vorsprünge oder Zähne des Bremsscheibentopfes ausbilden können.

In einer Ausführungsform kann das Verfahren ein Einbringen des Bremsscheibentopfrohlings (oder zumindest eines rohrförmigen Abschnitts des Bremsscheibentopfrohlings) in den Bremsring beinhalten. Nach dem Einbringen findet dann das Einformen des Bremsscheibentopfrohlings (oder zumindest eines rohrförmigen Abschnitts des Bremsscheibentopfrohlings) in die Innenprofilierung statt.

Der Bremsscheibentopfrohling kann insbesondere spielfrei oder mit einem (leichten) Pressitz in den Bremsring eingebracht werden.

Das Einformen findet generell durch einen oder mehrere Prägeschritte statt.

Zum Beispiel kann das Prägewerkzeug ein profilierter Dorn sein, und das Einformen beinhaltet (oder geschieht im wesentlichen durch) ein Einschieben des Dorns in den bereits in den Bremsring eingebrachten Bremsscheibentopfrohling. Dadurch kann zum Beispiel ein vollumfängliches Einformen des Bremsscheibentopfrohlings in die Innenprofilierung in einem einzigen Schritt erreicht werden.

Insbesondere kann das Prägen aber auch durch Hämmern, also hämmernd, stattfinden. Dieser Fall wird unten noch näher ausgeführt.

Das beschriebene Verfahren ermöglicht es, eine Vorspannung zwischen Bremsring und Bremsscheibentopf zu erzeugen, genauer eine Vorspannung zwischen der Innenprofilierung (insbesondere Innenverzahnung) des Bremsrings und der (im Rahmen des Verfahrens erzeugen) Profilierung oder Verzahnung des Bremsscheibentopfs. Weiter können auch formschlüssige Verbindungen lokal im Bereich einzelner Profillücken und gegebenenfalls auch einzelner Profilvorsprünge (z.B. Profilzähne) erzeugt werden. Weiter unten sind weitere Details dazu beschrieben. Dadurch ergeben sich ein besserer Halt, eine bessere Verdrehfestigkeit und eine bessere Drehmomentübertragung zwischen Bremsring und Bremsscheibentopf, auch und insbesondere bei Vorgängen, bei denen sich der Bremsring erhitzt, also z.B. bei Bremsvorgängen.

Ein Schritt zur Präzisionsausrichtung der rotatorischen Ausrichtungen von Bremsring und Bremsscheibentopfrohling (bzw. Bremsscheibentopf) vor dem Verfahren oder zu Beginn des Verfahrens kann überflüssig gemacht werden. Eine Profilierung, insbesondere Verzahnung, des Bremsscheibentopfs (genauer: die Profilierung oder Verzahnung, die der Bremsscheibentopf letztlich haben wird) wird erst im Verfahren selbst erzeugt (durch Einforien durch Prägen), so dass sich durch das Herstellungsverfahren selbst eine höchstpräzise rotatorische Ausrichtung der Profilierungen / Verzahnungen von Bremsring und Bremsscheibentopf ergibt.

Weiter ist es möglich, mittels des beschriebenen Verfahrens eine hochgenaue Ausrichtung der Achsen von Bremsring und Bremsscheibentopf zu erreichen. Es kann also ein exzellenter Planlauf erreicht werden, und zwar, zumindest im allgemeinen, ohne dass eine Nachbearbeitung wie ein Nachschleifen des Bremsrings nötig wäre.

Weiter erlaubt es das Verfahren, ein rotatorisches Spiel zwischen Bremsring und Bremsscheibentopf der Verbundbremsscheibe zu wählen, insbesondere wobei diese Spiel praktisch null sein kann (spielfrei) oder eine wählbare Grösse hat. Auch kann es das Verfahren ermöglichen, eine (mechanische) Vorspannung zwischen Bremsring und Bremsscheibentopf zu erzeugen, wie sie für Verbundbremsscheibe oft wünschenswert ist.

Bei entsprechender Ausbildung der Innenprofilierung, zum Beispiel taillert, können auch lokale formschlüssige Verbindungen im Bereich einzelner Profillücken und gegebenenfalls auch einzelner Profilvorsprünge (z.B. Profilzähne) erzeugt werden. Auf diese Weise können besonders stabile Passungen zwischen Bremsring und Bremsscheibentopf erreicht werden. Weiter unten sind weitere Details dazu beschrieben.

Es kann vorgesehen sein, dass die Innenprofilierung kantenfrei ist, insbesondere in dem Sinne, dass die durch die Innenprofilierung in einer auf der Drehachse senkrecht stehenden Schnittfläche gebildete Kontur keine Kanten aufweist, wobei dies zumindest in allen derartigen Schnittflächen in einem Abschnitt parallel zu der Drehachse der Fall ist, typischerweise in allen derartigen Schnittflächen, in denen die Innenprofilierung ausgebildet ist. Kantenfreiheit kann dabei insbesondere so verstanden werden, dass entsprechende Krümmungsradien mindestens 10% der Profiltiefe der Innenprofilierung betragen, insbesondere mindestens 20% oder sogar mindestens 25%.

Ein im Falle von aus dem Stand der Technik bekannten Verfahren zumindest gelegentlich notwendiges Trimmen eines mit einer Profilierung versehenen Bremsscheibentopfes vor dem Zusammenbringen von Bremsring und Bremstopf, also ein Ablängen nach einer Profilerstellung im rohrförmigen Abschnitt des Bremsscheibentopfes, kann im Falle des hier beschreibenen Herstellungsverfahrens entfallen.

Bei einer aus dem Stand der Technik bekannten Art, Verbundbremsscheiben zu fertigen, indem ein vorab profilierter Bremsring und ein vorab profilierter Bremsscheibentopf zusammengefügt werden, ist es oftmals erforderlich, die profilierten Teile jeweils in Toleranzklassen einzuteilen und dann anschliessend zueinander passende Bremsring-Bremsscheibentopf-Paare zu bilden. Derartige Arbeitsschritte sind überflüssig, wenn, wie hier vorgeschlagen, der Bremsscheibentopf durch Einformen eines Bremsscheibentopfrohlings in die Innenprofilierung des Bremsscheibenrings erfolgt.

In einer Ausführungsform beinhaltet das Einformen ein Hintereinanderausführen einer Mehrzahl von Prägeschritten im Bereich verschiedener Profillücken, insbesondere Zahnlücken, der Innenprofilierung.

Die Einformung wird so in mehrere Teilumformungsschritte (jeweils durch einen Prägeschritt) aufgeteilt. Ein zeitliches Nacheinander von Prägeschritten an verschiedenen Stellen entlang des Umfangs der Innenprofilierung (bzw. entlang des Umfangs es rohrförmigen Abschnitts des Bremsscheibentopfrohlings) kann stattfinden.

Die Prägeschritte werden mittels des mindestens einen Prägewerkzeugs durchgeführt.

Es kann ausreichend sein, dass lediglich ein einziges Prägewerkzeug verwendet wird. Aber es ist auch möglich, dass zwei Prägewerkzeuge (oder gegebenenfalls noch mehr) im Verfahren verwendet werden.

Bei jedem der Prägeschritte wird der Bremsscheibentopfrohling jeweils im Bereich der jeweiligen Profillücke (oder Profillücken) oder Zahnlücke (oder Zahnlücken) umgeformt.

Es kann vorgesehen werden, dass der Bremsscheibentopfrohling im Bereich jeder Profil- oder Zahnlücke der Innenverzahnung mindestens einmal durch das mindestens eine Prägewerkzeug umgeformt wird.

Wie oben bereits erwähnt kann ein Prägewerkzeug zwei oder mehr Wirkbereiche (oder Prägebereiche) aufweisen, z.B. so dass in einem Prägeschritt der Bremsscheibentopfrohling im Bereich zweier (oder mehrerer) typischerweise benachbarter Zahnlücken der Innenverzahnung umgeformt wird, oder, genauer, in die Innenprofilierung eingeformt wird. Es ist andererseits auch (zusätzlich oder alternativ) möglich, mehrere, insbesondere zwei Prägewerkzeuge (mit je mindestens einem Wirkbereich) vorzusehen, wobei diese den Bremsscheibentopfrohling entweder abwechselnd oder gleichzeitig, z.B. an insbesondere bezüglich der Achse (radial) gegenüberliegenden Seiten des Bremsscheibentopfrohlings bearbeiten. Im Falle der abwechselnden Bearbeitung können die zwei Prägewerkzeuge auch als ein einziges Prägewerkzeug angesehen werden, insbesondere als ein solches, das gegenüberliegende Wirkbereiche aufweist. Im Falle der gleichzeitigen Bearbeitung kann eine zumindest teilweise Kompensation der während der Prägeschritte auf den Bremsring wirkenden Kräfte stattfinden.

Es kann vorgesehen sein, dass das Einformen nicht mehr als genau einen Prägeschritt im Bereich jeder Zahnlücke der Innenprofilierung beinhaltet.

In einer Ausführungsform beinhaltet das Einformen mindestens zwei, insbesondere mindestens drei Prägeschritte im Bereich jeder Zahnlücke der Innenprofilierung. Je nach Art der Profilierung oder Verzahnung (insbesondere der Verzahnungshöhe) und je nach Wahl der Materialien des Bremstopfrohlings und des Bremsrings können auch mindestens vier oder noch mehr Prägeschritte pro Zahnlücke der Innenprofilierung stattfinden.

Auf diese Weise kann eine fortschreitende Vertiefung der im Bremsscheibentopfrohling erzeugten Profilierung (oder Verzahnung) bewirkt werden. Die Einformung wird so in mehrere Teilumformungsschritte (jeweils durch einen Prägeschritt) aufgeteilt. Ein mehrfaches Prägen an der gleichen Stelle entlang des Umfangs (der Innenverzahnung bzw. des rohrförmigen Teils des Bremsscheibentopfrohlings) kann dann stattfinden.

Das Verfahren kann beispielsweise so durchgeführt werden, dass in einer Mehrzahl von Rotationsumläufen des Werkstückes (welches durch den Bremsring und den eingebrachten Bremsscheibentopfrohling oder in einem engeren Sinne durch den Bremsscheibentopfrohling gebildet wird) durch die periodische Bearbeitung des Werkstücks mittels der Prägewerkzeuge eine immer tiefere Ausbildung einer Profilierung des Bremsscheibentopfrohlings erzeugt wird, bis eine vorgegebene Profilierungs- oder Verzahnungstiefe und -form des Bremsscheibentopfes erreicht ist.

Es kann vorgesehen werden, dass der Bremsscheibentopfrohling im Bereich jeder Profil- oder Zahnlücke der Innenverzahnung mindestens zwei- oder mindestens dreimal durch das mindestens eine Prägewerkzeug umgeformt wird.

Für die genannten zwei oder mehr Prägeschritte können für jede Zahnlücke ein und derselbe oder auch zwei oder mehr verschiedene der Prägewerkzeuge zur Anwendung kommen.

In einer Ausführungsform führt der Bremsring zusammen mit dem eingebrachten Bremsscheibentopfrohling eine Rotationsbewegung mit zeitlich variierender Rotationsgeschwindigkeit um eine Drehachse der Verbundbremsscheibe durch, und das mindestens eine Prägewerkzeug führt radial oszillierende Bewegungen durch, die mit der genannten Rotationsbewegung synchronisiert sind, so dass das mindestens eine Prägewerkzeug den Bremsscheibentopfrohling wiederholt, insbesondere periodisch bearbeitet.

Der Begriff "radial" ist durch die Drehachse definiert. Die Drehachse der Verbundbremsscheibe ist selbstverständlich durch die spätere Verwendung der Verbundbremsscheibe gegeben und ist somit durch die Drehachse des zu bremsenden rotierenden Gegenstandes, typischerweise ein Fahrzeugrad, gegeben, aber sie kann auch durch die Innenprofilierung, insbesondere Innenverzahnung, des Bremsringes definiert werden, z.B. als die Achse, die sich zentral durch die Innenprofilierung oder Innenverzahnung erstreckt.

Auf diese Weise kann ein rasches Einformen des Bremsscheibentopfrohlings in die Innenprofilierung erreicht werden und dies auch noch mit einer hohen Präzision.

Dabei kann weiter vorgesehen werden, dass das mindestens eine Prägewerkzeug den Bremsscheibentopfrohling in solchen Phasen der Rotationsbewegung bearbeitet, in denen Bremsring und eingebrachter Bremsscheibentopfrohling zumindest momentan stillstehen, wobei das mindestens eine Prägewerkzeug den Bremsscheibentopfrohling in Phasen des Rotationsstillstandes von Bremsring und eingebrachtem Bremsscheibentopfrohling bearbeitet.

Auf diese Weise kann das Einformen mit sehr hoher Präzision erfolgen.

Insbesondere kann die Rotationsbewegung eine intermittierende Rotation sein. Im Falle einer intermittierenden Rotation besteht immer wieder, typischerweise periodisch, während einer im allgemeinen wählbaren Zeitdauer ein Rotationsstillstand.

Auf diese Weise kann das Einformen mit besonders hoher Präzision erfolgen, allerdings ist die Gesamtbearbeitungsdauer wegen der Stillstandszeiten leicht erhöht.

Der Bremsscheibentopfrohling weist im allgemeinen einen rohrförmigen Abschnitt und einen daran anschliessenden Bodenteil auf, insbesondere, wobei der rohrförmige Abschnitt mit dem Bodenteil einstückig ausgebildet ist.

In einer Ausführungsform ist der Bremsscheibentopfrohling vor dem Einbringen in den Bremsring unprofiliert, insbesondere unverzahnt. Dies betrifft den rohrförmigen Abschnitt, in den dann im Verlaufe des Verfahrens eine Profilierung eingebracht wird.

Vor dem Einbringen in den Bremsring ist somit im Bremsscheibentopfrohling oder zumindest in dessen rohrförmigem Abschnitt keine Profilierung oder Verzahnung (und keine Vorprofilierung oder Vorverzahnung) vorhanden, zumindest nicht soweit sie zu der Innenverzahnung passend wäre.

Der Bremsscheibentopfrohling oder zumindest dessen rohrförmigem Abschnitt kann somit (vor dem Einbringen in den Bremsring) im wesentlichen rotationssymmetrisch ausgebildet sein, insbesondere zylindrisch geformt sein.

Es könnte alternativ aber auch vorgesehen werden, dass der Bremsscheibentopfrohling vorprofiliert oder mit einer Vorverzahnung versehen ist.

Der Fall ohne (Vor-) Profilierung / (Vor-) Verzahnung macht ein rotatorisches Zueinender-Ausrichten von Bremsring und Bremsscheibentopfrohling vor dem Einbringen überflüssig und erspart das Erzeugen der (Vor-) Profilierung oder (Vor-) Verzahnung.

In einer Ausführungsform weist die Innenprofilierung Profillücken auf, die tailliert sind und/oder jeweils durch mindestens eine solche Profilflanke begrenzt sind, die einen Abschnitt oder eine Stelle aufweist, wo sie innerhalb von 10°, insbesondere innerhalb von 5°, zu einer zentral durch die jeweilige Profilücke verlaufende Radialachse parallel verlaufend ist. Weitere Details zu derartig ausgebildeten Innenprofilierungen sind weiter unten beschrieben.

In einer Ausführungsform wird mittels des mindestens einen Prägewerkzeugs während des Einformens mindesten ein nach aussen gerichteter Vorsprung zur gegenseitigen axialen Fixierung von Bremsring und Bremsscheibentopf am Bremsscheibentopf ausgebildet. Insbesondere kann vorgesehen werden, dass mittels des mindestens einen Prägewerkzeugs während des Einformens mehrere nach aussen gerichtete Vorsprünge zur gegenseitigen axialen Fixierung von Bremsring und Bremsscheibentopf am Bremsscheibentopf ausgebildet werden.

Solche Vorsprünge können auch als Axialbegrenzungen oder Axialanschläge bezeichnet werden

"Nach aussen" heisst hier genauer, dass sich die Vorsprünge von der Drehachse weg in radiale Richtung erstrecken.

Die Vorsprünge können radial nach aussen vorstehen und insbesondere können sie diejenigen Bereiche des Bremsscheibentopfes radial überragen, in denen der Bremsscheibentopf in die Innenverzahnung eingeformt ist.

Die genannten Vorsprünge können Wulste sein. Dies ist dann typischerweise in der Art ihrer Entstehung begründet.

Durch die Vorsprünge kann ein Auseinanderschieben von Bremsscheibentopf und Bremsring verhindert werden oder ein axiales Spiel zwischen Bremsscheibentopf und Bremsring begrenzt oder minimiert werden. Die Vorsprünge können als Axialbegrenzung wirken.

Dies kann insbesondere bei einseitigen axialen Belastungen der Verbundbremsscheibe oder beim Erhitzen und einem daraus resultierenden Ausdehnen des Bremsrings von Vorteil sein, wie es bei Bremsvorgängen der Fall sein kann.

Es kann insbesondere vorgesehen sein, dass der mindestens eine Vorsprung so ausgestaltet ist, dass der Bremsscheibentopf axial spielfrei oder sogar mit einer axialen Vorspannung auf dem Bremsring gehalten ist. Eine geeignete Wahl der Verfahrensparameter kann dies ermöglichen. Zum Beispiel kann der Bremsring zwischen zwei solchen Vorsprüngen axial spielfrei oder mit axialer Vorspannung gehalten sein.

Ein einziger Vorsprung kann bereits die genannte Wirkung haben. Beispielsweise kann dieser Vorsprung ringartig ausgebildet sein und insbesondere mit einem Einstich im Bremsring zusammenwirken. In einem anderen Beispiel können zwei ringartige oder ringförmige Vorsprünge ausgebildet sein, wobei jeder der beiden mit einer die Innenprofiliering begrenzenden Stirnfläche des Bremsrings zusammenwirkt.

In einer Ausführungsform wird der mindestens eine Vorsprung durch Umformungen des Bremsscheibentopfrohlings erzeugt, die durch Prägesschritte bewirkt werden, durch welche auch, typischerweise gleichzeitig, Umformungen des

Bremsscheibentopfrohlings zum Erreichen des Einformens bewirkt werden.

Es kann also ein gleichzeitiges Einformen in die Innenprofilierung (genauer: in Zahnlücken der Innenprofilierung) und Erzeugen des Vorsprungs bzw. der Vorsprünge erreicht werden.

Es kann das gleiche Prägewerkzeug für das Einformen (des Bremsscheibentopfrohlings) und für das Erzeugen des mindestens einen Vorsprungs verwendet werden.

Bemerkenswerterweise kann erreicht werden, dass in denselben Prägeschritten das Einformen des Bremsscheibentopfrohlings in die Innenprofilierung und auch das Erzeugen des mindestens einen Vorsprungs, insbesondere für eine Axialfixierung, bewirkt wird.

Für das Vorsehen einer axialen Fixierung (von Bremsring und Bremsscheibentopfrohling) müssen dann keine gesonderten Fertigungsschritte vorgesehen werden. Gegenüber bestimmten aus dem Stand der Technik bekannten Verfahren können also spezielle Arbeitsschritte zur Erstellung einer axialen Fixierung entfallen.

In einer Ausführungsform werden Vorsprünge an axialen Enden der Innenprofilierung gebildet. Insbesondere können mindestens zwei Vorsprünge gebildet werden, wobei mindestens einer der Vorsprünge an einem axialen Ende der Innenprofilierung und mindestens ein anderer der Vorsprünge an einem anderen axialen Ende der Innenprofilierung gebildet werden.

In diesem Fall wird im allgemeinen vorgesehen sein, dass sich der Bremsscheibentopfrohling nach Einbringen in den Bremsring in axialer Richtung beidseitig überstehend über die axiale Erstreckung der Innenprofilierung erstreckt. Und weiter wird in diesem Fall im allgemeinen vorgesehen sein, dass sich das mindestens eine Prägewerkzeug, genauer der Wirkbereich oder die Wirkbereiche des mindestens einen Prägewerkzeuges, beidseitig überstehend über die axiale Erstreckung der Innenprofilierung erstreckt - zumindest während der Prägesschritte.

Es ist auch möglich, dass ein Vorsprung oder mehrere Vorsprünge alternativ oder zusätzlich an Flächen oder Einstichen oder Ausnehmungen des Bremsrings gebildet werden, die zwischen den axialen Enden der Innenprofilierung liegen, oder an mindestens einer solchen Fläche, mindestens einem solchen Einstich, mindestens einer solchen Ausnehmung.

Die Flächen oder Einstiche oder Ausnehmungen des Bremsrings grenzen dabei typischerweise an die Innenprofilierung an.

Die genannten Flächen oder auch Wandungen der genannten Einstiche oder Ausnehmungen können parallel zu einer achsensenhechten Ebene ausgerichtet sein oder innerhalb von ±40° oder eher innerhalb von ±25° diese Ausrichtung haben. Dadurch kann eine gute Axialfixierung erreicht werden, insbesondere wenn an den genannten Flächen oder Wandungen ein rechter oder ein spitzer Winkel gebildet wird.

Weitere mögliche Details zu dem mindestens einen Vorsprung, der mindestens einen Axialfixierung sind weiter unten, insbesondere bei der Verbundbremsscheibe beschrieben.

Es wird zumeist vorgesehen sein, dass, vor dem Einbringen in den Bremsring, der Aussendurchmesser des Bremsscheibentopfrohlings (genauer: des rohrförmigen Abschnitts), kleiner als ein Aussendurchmesser der Innenprofilierung bzw., im Falle einer Innenverzahnung als Innenprofilierung, kleiner als ein Fusskreisdurchmesser der Innenverzahnung ist.

Generell kann der Aussendurchmesser des Bremsscheibentopfrohlings (genauer: des rohrförmigen Abschnitts) desweiteren grösser oder gleich oder kleiner sein als ein Innendurchmesser der Innenprofilierung bzw., im Falle einer Innenverzahnung als Innenprofilierung, als ein Kopfkreisdurchmesser der Innenverzahnung.

Insbesondere kann der Aussendurchmesser im Bereich zwischen 2 mm mehr und 2 mm weniger als der Kopfkreisdurchmesser der Innenverzahnung betragen. Es kann zum Erleichtern des Einbringens vorgesehen werden, dass, vor oder bei dem Einbringen in den Bremsring, der Aussendurchmesser des Bremsscheibentopfrohlings (genauer: des rohrförmigen Abschnitts) durch Anphasen am dem Bodenteil abgewandten Ende (lokal) reduziert ist. Eine weitere Möglichkeit, durch welche das Einbringen des Bremsscheibentopfrohlings in den Bremsring erleichert werden kann, besteht darin, einen (leicht) konisch ausgebildeten rohrförmigen Abschnitt vorzusehen. Der Aussendurchmesser des Bremsscheibentopfrohlings kann sich dann also, insbesondere in Richtung zum Bodenteil hin oder alternativ in Richtung weg vom Bodenteil, verjüngen. Beispielsweise kann vorgesehen sein, dass sich der Aussendurchmesser des rohrförmigen Abschnitts über denjeningen (axialen) Bereich, in dem der rohrförmige Abschnitt in die Innenprofiliering eingeformt wird, veringert, insbesondere kontinuierlich verringert, beispielsweise um zwischen 0.05 % und 5 % des Aussendurchmessers oder typischerweise um zwischen 0.1 % und 2 % des Aussendurchmessers, oder um zwischen 0.05 mm und 10 mm oder typischerweise zwischen 0.2 mm und 3 mm.

Wenn der Aussendurchmesser des Bremsscheibentopfrohlings kleiner ist als ein Innendurchmesser der Innenprofilierung bzw., im Falle einer Innenverzahnung als Innenprofilierung, als ein Kopfkreisdurchmesser der Innenverzahnung, dann kann ein Verformen des Bremsscheibentopfrohlings beim Einbringen im allgemeinen vermieden werden.

Wenn hingegen der Aussendurchmesser des Bremsscheibentopfrohlings grösser ist als ein Innendurchmesser der Innenprofilierung bzw., im Falle einer Innenverzahnung als Innenprofilierung, als ein Kopfkreisdurchmesser der Innenverzahnung, dann findet beim Einbringen eine Verformung oder ein Umformen des Bremsscheibentopfrohlings statt. Um das Einbringen in einem solchen Falle zu erleichtern, kann z.B. das oben genannte Anphasen vorgesehen werden. Bereits nach dem Einbringen (und vor einem ersten Prägeschritt) sind dann Bremsscheibentopfrohling und Bremsring aneinander befestigt - wenn auch nur in geringerem Masse als es nach Abschluss des Verfahrens der Fall sein wird.

Im Zusammenhang mit der Erfindung erscheinen die folgenden Dimensionen und Dimensionsbereiche (die auch kombinert werden können) besonders sinnvoll:
- Innendurchmesser der Innenprofilierung: 20 mm bis 2000 mm, insbesondere 50 mm bis 800 mm;
- Profiltiefe der Innenprofilierung: 0.5 mm bis 25 mm, insbesondere 0.8 mm bis 10 mm;
- axiale Länge der Innenprofilierung oder verzahnte Länge: 2 mm bis 400 mm, insbesondere 10 mm bis 50 mm.

Die Vorrichtung zur Herstellung einer Verbundbremsscheibe, die einen Bremsscheibentopf mit einem rohrförmigen Abschnitt sowie einen eine Innenprofilierung aufweisenden Bremsring aufweist, kann dazu verwendet werden, den Bremsscheibentopf durch Umformen eines Bremsscheibentopfrohlings (insbesondere durch Einformen desselben in die Innenprofilierung des Bremsrings) zu erstellen. Die Vorrichtung weist auf:
- einen um seine Längsachse rotierbaren Werkstückhalter zur Halterung des Bremsringes, in den der Bremsscheibentopfrohling eingebracht ist, so dass sich der rohrförmige Abschnitt innerhalb der Innenprofilierung befindet, derart, dass der rohrförmige Abschnitt an seiner Innenseite bearbeitbar ist;
- einen Antrieb für die Rotation des Werkstückhalters, der ausgelegt ist zur Erzeugung einer Rotation mit zeitlich variierender Rotationsgeschwindigkeit, insbesondere einer intermittierenden Rotation;
- einen Werkzeughalter zum Halten mindestens eines Prägewerkzeuges, der zum Durchführen einer radial zu der Längsachse verlaufenden linear oszillierenden Bewegung antreibbar ist, so dass der rohrförmige Abschnitt an seiner Innenseite durch das mindestens eine Prägewerkzeug wiederholt, insbesondere periodisch bearbeitbar ist;
- eine Synchronisationsvorrichtung zur Synchronisation einer mittels des Antriebs erzeugbaren Rotation des Werkstückhalters mit der radial zu der Längsachse verlaufenden linear oszillierenden Bewegung des Werkzeughalters.

Mittels der Maschine können Verbundbremsscheiben sehr effizient und präzise hergestellt werden, insbesondere mittels des beschriebenen (typischerweise hämmernden) Herstellungsverfahrens.

Die Achse des Bremsrings, die z.B. durch die Innenprofilierung definiert sein kann, ist dabei im allgemeinen entlang der Längsachse ausgerichtet.

Auch die Achse des Bremsscheibentopfrohlings ist dabei im allgemeinen entlang der Längsachse ausgerichtet.

Die Drehachse der Verbundbremsscheibe ist dabei im allgemeinen entlang der Längsachse ausgerichtet.

Es kann ein Antrieb für die oszillierenden Bewegung vorgesehen sein (Werkzeughalterantrieb), wobei dieser (ganz oder teilweise) identisch mit oder (ganz oder teilweise) verschieden sein kann von dem Antrieb für die Rotation des Werkstückhalters. In diesem Fall kann die Synchronisationsvorrichtung einen Teil des Antriebs sein.

Der Werkzeughalterantrieb kann beispielsweise einen Exzenter oder eine Kurbel aufweisen.

Der Werkstückhalter kann beispielsweise einen Bremsringhalter und einen Bremsscheibentopfrohlinghalter aufweisen, die insbesondere miteinander zur Erhaltung der gegenseitigen Positionierung von Bremsring und Bremsscheibentopfrohling wirkverbunden sein können.

Die Synchronisationsvorrichtung kann beispielsweise auf mechanische oder, eher, auf elektronische Weise synchronisieren.

In einer Ausführungsform weist die Vorrichtung eine Positionsbestimmungseinheit zur Bestimmung einer relativen rotatorischen Positionierung von Bremsring und Werkzeughalter oder Bremsring und Prägewerkzeug auf.

Diese kann der relativen rotatorischen Positionierung von Bremsring und dem mindestens einen Prägewerkzeug dienen.

Die Vorrichtung kann das mindestens eine Prägewerkzeug aufweisen.

Mithilfe der Positionsbestimmungseinheit (oder zumindest mittels Daten oder Signalen, welche die Positionsbestimmungseinheit ausgeben kann) kann eine rotationsmässig präzise Ausrichtung von Bremsring und Werkzeughalter (und/oder Prägewerkzeug) zueinander ermöglicht werden.

Beispielsweise kann eine rotatorische Position des Bremsrings (und somit dann auch des den Bremsring haltenden Werkstückhalters) relativ zu einer Referenz bestimmt werden, welche wiederum in festgelegter oder bekannter Weise rotatorisch relativ zum Werkzeughalter (oder zum Prägewerkzeug) positioniert ist, oder auch die Position des Werkzeughalters oder die des mindestens einen Prägewerkzeuges wird ebenfalls relativ zu der Referenz (oder zu einer weiteren Referenz) bestimmt.

Die Positionsbestimmungseinheit kann beispielsweise einen optischen oder mechanischen Sensor zur Bestimmung der rotatorischen Ausrichtung des Bremsrings und/oder des Prägewerkzeuges oder des Werkzeughalters aufweisen. Der Sensor kann sich beispielsweise an der Innenprofilierung des Bremsrings orientieren, z.B. kann der Sensor die rotatorische Position mindestens eines Zahnes oder mindestens einer Zahnlücke der Innenprofilierung bestimmen, und/oder der Sensor kann sich beispielsweise an dem (mindestens einen) Wirkbereich des mindestens einen Prägewerkzeuges orientieren.

Eine präzise rotatorische Positionierung von Prägewerkzeug und Innenprofilierung erlaubt ein präzises Einformen des Bremsscheibentopfrohlings in den Bremsring. Ein Eingreifen des mindestens einen Prägewerkzeuges (mit seinem mindestens einen Wirkbereich) mittig zu Profillücken / Zahnlücken kann auf diese Weise sichergestellt werden.

In einer Ausführungsform weist die Vorrichtung eine Einbringvorrichtung zum Einbringen des Bremsscheibentopfrohlings in den Bremsring auf.

Beispielsweise kann die Einbringvorrichtung zwei Haltevorrichtungen aufweisen, eine für den Bremsscheibentopfrohling, die andere für den Bremsring, wobei die beiden eine gemeinsame Mittelachse aufweisen und die eine Haltevorrichtung relativ zu der anderen Haltevorrichtunge entlang der Mittelachse bewegbar ist. Diese Mittelachse entspricht typischerweise der Drehachse der Verbundbremsscheibe.

Die zwei Haltevorrichtungen können manuell oder mittels eines Antriebes relativ zueinander entlang der Mittelachse bewegt werden. So kann der Bremsscheibentopfrohling mittig in den Bremsring eingebracht werden, insbesondere in automatisierter oder automatisierbarer Form.

Die Einbringvorrichtung kann beispielsweise einen Roboter beinhalten.

Es kann auch eine Vorrichtung zur Erzeugung eines Radialvorschubs des Werkzeughalters vorgesehen sein. Mittels dieser kann eine (radiale) Zustellbewegung des Werkzeughalters und somit des Prägewerkzeuges erzeugt werden.

Die Verwendung ist eine Verwendung einer Vorrichtung der beschriebenen Art zum Herstellen einer Verbundbremsscheibe. Die Verbundbremsscheibe wird dabei zumeist im wesentlichen aus einem Bremsscheibentopfrohling und einem Bremsring erstellt.

Man kann die Verwendung auch als eine Verwendung einer Vorrichtung der beschriebenen Art zum aneinander Befestigen eines Bremsscheibentopfes und eines Bremsrings einer Verbundbremsscheibe ansehen.

Der Bremsring weist (für eine gute Passung zwischen Bremsring und Bremsscheibentopf) eine Innenprofilierung auf, die Profillücken aufweist, die tailliert sind und/oder jeweils durch mindestens eine solche Profilflanke begrenzt sind, die einen Abschnitt oder eine Stelle aufweist, wo sie innerhalb von 10°, insbesondere innerhalb von 5°, zu einer zentral durch die jeweilige Profilücke verlaufende Radialachse parallel verlaufend ist.

Die Winkel beziehen sich dabei insbesondere auf die Winkel zu entsprechenden (lokalen) Tangenten an die Profilflanke (in der Ebene, die senkrecht zur Drehachse ausgerichtet ist).

Typischerweise sind mindestens drei solche Profillücken vorgesehen, und insbesondere können auch alle Profillücken der Innenprofilierung in der genannten Art ausgeführt sein.

Weiter können die beiden Profilflanken entsprechender Profilücken in der genannten Art ausgeführt sein.

Beide Profilflanken einer entsprechenden Profilücke können die gleiche (wenn auch gespiegelte) Kontur aufweisen (symmetrische Profillücke). Aber es können auch andere Fälle (unsymmetrische Profillücken) vorgesehen sein. Entsprechend kann auch die genannte Taille symmetrisch oder asymmetrisch ausgebildet sein.

Mit dem Begriff "Radialachse" wird eine Achse durch eine Drehachse der Verbundbremsscheibe beschrieben, die in einer Ebene liegt, die senkrecht zu dieser Drehachse ausgerichtet ist.

Im Falle symmetrischer Profilücken ist die zentral durch die jeweilige Profilücke verlaufende Radialachse gleich der Symmetrieachse. Im allgemeinen Fall, der auch unsymmetrische Profilücken umfasst, ist die zentral durch die jeweilige Profilücke verlaufende Radialachse diejenige Radialachse, durch welche die Fläche, die durch die Profillücke in der Ebene senkrecht zur Drehachse beschrieben wird, in zwei Hälften gleichen Flächeninhalts halbiert wird.

Desweiteren kann die Innenprofilierung Profilvorsprünge (zum Beispiel Profilzähne) aufweisen, die tailliert sind und/oder jeweils durch mindestens eine solche Profilflanke begrenzt sind, die einen Abschnitt oder eine Stelle aufweist, wo sie innerhalb von 10°, insbesondere innerhalb von 5°, zu einer zentral durch die jeweilige Profilücke verlaufende Radialachse verlaufend parallel ist.

In diesem Fall können sinngemäss die gleichen weiteren speziellen Ausführungsformen vorgesehen werden wie oben für die entsprechend ausgebildete Profillücke beschrieben. Die Passung und das Verhalten bei erhitztem Bremsring können in diesem Falle besonders gut sein.

In einem ersten Aspekt der Verbundbremsscheibe weist diese den beschriebenen Bremsring sowie einen Bremsscheibentopf auf, wobei der Bremsscheibentopf in die Innenprofilierung des Bremsrings eingeformt ist.

In einem zweiten Aspekt der Verbundbremsscheibe weist diese einen Bremsscheibentopf sowie einen Bremsring auf, der eine Innenprofilierung aufweist in welche der Bremsscheibentopf eingeformt ist, wobei der Bremsscheibentopf mindestens einen nach aussen gerichteten Vorsprung zur gegenseitigen axialen Fixierung von Bremsring und Bremsscheibentopf aufweist.

In einer Ausführungsform weist der Vorsprung bzw. weisen die Vorsprünge jeweils mindestens einen Bereich auf, in welchem er bzw. sie eine Form aufweisen, wie sie durch freien Materialfluss entstehen kann.

In einer Ausführungsform ist die Form, die der Vorsprung bzw. die Vorsprünge in dem jeweiligen mindestens einen Bereich aufweisen, durch freien Materialfluss entstanden.

In einer Ausführungsform sind die Vorsprünge wulstartig oder wulstförmig ausgebildet.

In einer Ausführungsform wird durch den mindestens einen Vorsprung eine kontinuierlich oder abschnittsweise entlang eines Rings vorhandene Struktur gebildet. Im Falle der abschnittsweise entlang des Rings vorhandenen Struktur kann diese insbesondere an einer Vielzahl von Stellen entlang des Rings durch die Vorsprünge gebildet werden.

In einer Ausführungsform wird durch die Struktur eine Linie nachgebildet, die durch die Form der Innenverzahnung an einer Stirnfläche des Bremsrings beschrieben ist, insbesondere wobei die Stirnfläche eine die Innenprofilierung begrenzende Stirnfläche ist. Dabei kann diese Nachbildung insbesondere dergestalt sein, dass die Struktur gegenüber der genannten Linie radial nach aussen verschoben ist. Die Grösse der Verschiebung kann dabei gegebenenfalls vom jeweils lokalen Radius der Innenprofilierung (an einer entsprechenden Stirnfläche am profilierten Bereich des Bremsrings) abhängig sein. Beispielsweise kann im Falle einer kontinuierlichen Struktur der Vorsprung im Bereich von Zahnlücken der Innenprofilierung weiter (oder alternativ weniger weit) radial nach aussen ragen als im Bereich von Zähnen der Innenprofilierung. Oder im Falle einer abschnittsweise entlang des Rings vorhandenen Struktur können Vorsprünge im Bereich von Zahnlücken (oder alternativ im Bereich von Zähnen) der Innenprofilierung beispielsweise radial weiter nach aussen ragen als im Bereich von Zahnflanken der Innenprofilierung.

Eine abschnittsweise entlang des Rings vorhandenen Struktur kann insbesondere durch eine Mehrzahl, z.B. mindestens 4 oder mindestens 20, von gleichmässig über den Umfang der Innenprofilierung verteilten Vorsprüngen gebildet werden.

Eine abschnittsweise entlang des Rings vorhandenen Struktur kann insbesondere durch genau so viele Vorsprünge gebildet werden, wie die Innenprofilierung Profillücken oder Zahnlücken oder Zähne hat.

Es kann vorgesehen sein, dass Vorsprünge im Bereich jeder Zahnlücke der Innenprofilierung vorhanden sind und/oder dass Vorsprünge im Bereich jeden Zahnkopfes der Innenprofilierung vorhanden sind.

Es kann vorgesehen sein, dass sich mindestens einer der Vorsprünge ringartig oder kontinuierlich über den gesamten Umfang des Bremsrings erstreckt. Er kann zum Beispiel eine entlang eines Ringes mäandernde Form aufweisen. Insbesondere kann vorgesehen sein, dass nicht mehr als genau zwei solche Vorsprünge vorhanden sind. Beispielsweise verhindert dabei dann der eine Vorsprung ein Ausschieben des Bremsscheibentopfs aus dem Bremsring in die eine axiale Richtung und der andere Vorsprung ein Aussschieben des Bremsscheibentopfs aus dem Bremsring in die entgegengesetzte axiale Richtung.

Im Falle von abschnittsweise entlang eines Rings vorhandener Strukturen kann beispielsweise vorgesehen sein, dass eine erste Mehrzahl von Vorsprüngen an einer ersten Stirnfläche des Bremsrings und eine zweite Mehrzahl von Vorsprüngen an einer zweiten Stirnfläche des Bremsrings vorhanden ist, so dass die erste Mehrzahl von Vorsprüngen ein Ausschieben des Bremsscheibentopfs aus dem Bremsring in eine axiale Richtung und die zweite Mehrzahl von Vorsprüngen ein Aussschieben des Bremsscheibentopfs aus dem Bremsring in die entgegengesetzte axiale Richtung verhindert.

Durch die Vorsprünge kann der Bremsring an Stirnflächen nahe der Innenprofilierung abschnittsweise oder kontinuierlich entlang seines Umfangs durch den Bremsscheibentopf (mit den Vorsprüngen) umgriffen werden.

Zusatzlich oder alternativ zu Vorsprüngen an Stirnflächen des Bremsrings nahe der Innenprofilierung kann mindestens ein Vorsprung des Bremsscheibentopfs vorgesehen sein, der an zwischen den Stirnflächen vorgesehenen Flächen oder Einstichen oder Ausnehmungen ausgebildet ist. Im Falle von kontinuierlich entlang des Umfangs der Innenprofilierung vorhandenen Flächen oder Einstichen oder Ausnehmungen kann der mindestens eine Vorsprung analog zum oben Beschriebenen eine kontinuierlich oder abschnittsweise entlang eines Rings vorhandene Struktur bilden. Im Falle von nichtkontinuierlich über den Umfang der Innenprofilierung verteilten Flächen oder Einstichen oder Ausnehmungen können pro Fläche oder Einstich oder Ausnehmung ein oder zwei Vorsprünge vorgesehen sein.

Der mindestens eine Vorsprung kann an die genannten Flächen oder Einstiche oder Ausnehmungen oder auch an die die Innenprofilierung begrenzenden Stirnflächen des Bremsrings angeformt sein.

Ein Bereich, in dem der mindestens eine Vorsprung in der genannten Weise angeformt ist, kann typischerweise an einen Bereich angrenzend sein, in dem die Form des mindestens einen Vorsprungs durch freien Materialfluss entstanden ist.

Weitere Ausführungsformen für die Verbundbremsscheibe ergeben sich aus den beschriebenen Verbundbremsscheibenherstellungsverfahren.

Das Verfahren zur Herstellung eines Rades für ein Fahrzeug, wobei das Rad eine Verbundbremsscheibe aufweist, zeichnet sich dadurch aus, dass die Verbundbremsscheibe durch das beschriebene

Verbundbremsscheibenherstellungsverfahren hergestellt wird, oder dass in dem Herstellungsverfahren die beschriebene Verbundbremsscheibe oder der beschriebene Bremsring verwendet wird.

Ein erfindungsgemässes Fahrzeug weist eine Verbundbremsscheibe der beschriebenen Art auf oder eine Verbundbremsscheibe, die durch das beschriebene Verbundbremsscheibenherstellungsverfahren hergestellt ist, oder eine Verbundbremsscheibe, die den beschriebenen Bremsring aufweist.

Das Fahrzeug kann insbesondere ein Kraftfahrzeug sein, beispielsweise ein Automobil, Motorrad, oder ein motorisiertes Fahrrad. Das Fahrzeug kann aber auch motorloses Fahrzeug sein.

In einer generalisierten Sicht auf die Erfindung ist diese nicht auf Verbundbremssscheiben bzw. deren Herstellung beschränkt. Vielmehr betrifft sie in dieser generalisierten Sicht statt des dann lediglich beispielhaften Bremsrings ein mit einer Innenprofilierung (oder Innenverzahnung) versehenes Aussenteil, z.B. einen Aussenring, und statt des dann lediglich beispielhaften Bremsscheibentopfs (und Bremsscheibentopfrohlings) ein Innenteil (und einen Innenteilrohling) mit einem rohrförmigen Abschnitt, wobei Innenteilrohling und Aussenteil aneinander befestigt oder miteinander verbunden werden oder anders gesagt, wobei ein Verbundteil erstellt wird, das Innenteil und Aussenteil aufweist.

Insbesondere kann das generalisierte Verfahren beschrieben werden als ein Verfahren zur Herstellung eines Verbundteils aufweisend ein Innenteil, das einen rohrförmigen Abschnitt aufweist, und ein Aussenteil, z.B. einen Aussenring, das eine Innenprofilierung, insbesondere eine Innenverzahnung, aufweist, wobei ein in das Aussenteil eingebrachter Innenteilrohling oder, genauer, ein rohrförmiger Abschnitt des Innenteilrohlings, mittels mindestens eines Prägewerkzeugs in die Innenprofilierung eingeformt wird.

Man kann, in einer anderen Sichtweise, das Verfahren auch als ein Verfahren zum Verbinden, insbesondere dauerhaften Verbinden, eines einen rohrförmigen Abschnitt aufweisenden Innenteils mit einem eine Innenprofilierung, insbesondere eine Innenverzahnung, aufweisenden Aussenteils, z.B. Aussenrings, ansehen, wobei ein in das Aussenteil eingebrachter Innenteilrohling oder, genauer, ein rohrförmiger Abschnitt des Innenteilrohlings, mittels mindestens eines Prägewerkzeugs in die Innenprofilierung eingeformt wird.

Speziellere Ausführungsformen des generalisierten Verfahrens ergeben sich aus den für den Spezialfall der Verbundbremsscheibe beschriebenen Ausführungsformen.

Die generalisierte Vorrichtung kann insbesondere beschrieben werden als eine Vorrichtung zur Herstellung eines Verbundteils, das ein einen rohrförmigen Abschnitt aufweisendes Innenteil und ein eine Innenprofilierung aufweisendes Aussenteil aufweist, wobei mittels der Vorrichtung das Innenteil durch Umformen eines Innenteilrohlings erstellbar ist und der Innenteilrohling einen rohrförmigen Abschnitt aufweist, wobei die Vorrichtung aufweist:
- einen um seine Längsachse rotierbaren Werkstückhalter zur Halterung des Aussenteils, in den das Innenteil eingebracht ist, so dass sich der rohrförmige Abschnitt innerhalb der Innenprofilierung befindet, derart, dass der rohrförmige Abschnitt an seiner Innenseite bearbeitbar ist;
- einen Antrieb für die Rotation des Werkstückhalters, der ausgelegt ist zur Erzeugung einer Rotation mit zeitlich variierender Rotationsgeschwindigkeit, insbesondere einer intermittierenden Rotation;
- einen Werkzeughalter zum Halten mindestens eines Prägewerkzeuges, der zum Durchführen einer radial zu der Längsachse verlaufenden linear oszillierenden Bewegung antreibbar ist, so dass der rohrförmige Abschnitt an seiner Innenseite durch das mindestens eine Prägewerkzeug wiederholt, insbesondere periodisch bearbeitbar ist;
- eine Synchronisationsvorrichtung zur Synchronisation einer mittels des Antriebs erzeugbaren Rotation des Werkstückhalters mit der radial zu der Längsachse verlaufenden linear oszillierenden Bewegung des Werkzeughalters.

In einer anderen Sichtweise kann die Vorichtung insbesondere auch beschrieben werden als eine Vorrichtung zum Verbinden, insbesondere dauerhaften Verbinden, eines einen rohrförmigen Abschnitt aufweisenden Innenteils mit einem eine Innenprofilierung, insbesondere eine Innenverzahnung, aufweisenden Aussenteils, z.B. Aussenrings, wobei mittels der Vorrichtung das Innenteil durch Umformen eines Innenteilrohlings erstellbar ist und der Innenteilrohling einen rohrförmigen Abschnitt aufweist, wobei die Vorrichtung die oben genannten Bestandteile (Werkstückhalter, Antrieb für die Rotation des Werkstückhalters, Werkzeughalter, Synchronisationsvorrichtung) aufweist.

Speziellere Ausführungsformen der generalisierten Vorrichtungen ergeben sich aus den für den Spezialfall der Verbundbremsscheibe beschriebenen Ausführungsformen.

Die generalisierte Verwendung kann insbesondere eine Verwendung der beschriebenen generalisierten Vorrichtung zum Herstellen eines Verbundteils sein oder, in einer anderen Sichtweise, eine Verwendung der beschriebenen generalisierten Vorrichtung in anderer Sichtweise zum Verbinden, insbesondere dauerhaften Verbinden, eines einen rohrförmigen Abschnitt aufweisenden Innenteils mit einem eine Innenprofilierung, insbesondere eine Innenverzahnung, aufweisenden Aussenteils, z.B. Aussenrings.

Speziellere Ausführungsformen der generalisierten Verwendungen ergeben sich aus den für den Spezialfall der Verbundbremsscheibe beschriebenen Ausführungsformen.

In der generalisierten Sicht auf die Erfindung kann das Verbundteil beschrieben werden als ein Verbundteil aufweisend ein Innenteil und ein Aussenteil, das eine Innenprofilierung, insbesondere Innenverzahnung, aufweist, in welche das Innenteil eingeformt ist, wobei das Innenteil nach aussen gerichtete Vorsprünge zur gegenseitigen axialen Fixierung von Aussenteil und Innenteil aufweist, insbesondere wobei die Vorsprünge jeweils mindestens einen Bereich auf weisen, in welchem sie eine Form aufweisen, wie sie durch freien Materialfluss entstehen kann.

Auch in der generalisierten Sichtweise können der Innenteilrohling und das Innenteil topfförmig sein. Und sie können insbesondere aus Blech, z.B. aus Stahlblech sein, zumindest in einem einzuformenden rohrförmigen Abschnitt. Das Aussenteil kann insbesondere metallisch sein.

Weitere Ausführungsformen und Vorteile gehen aus den abhängigen Patentansprüchen und den Figuren hervor.

Im folgenden wird der Erfindungsgegenstand anhand von Ausführungsbeispielen und den beiliegenden Zeichnungen näher erläutert. Es zeigen in schematisierter Form:
- Fig. 1: eine Illustration eines Details einer Vorrichtung zu Beginn des Einformprozessses, in einem achsenparallelen Schnitt;
- Fig. 2: eine Illustration des Bremsringes und des Bremsscheibentopfrohlings aus Fig. 1, in einem Schnitt senkrecht zur Achse;
- Fig. 3: eine Illustration eines Details der Vorrichtung aus Fig. 1, aber am Ende des Einformprozessses, in einem achsenparallelen Schnitt;
- Fig. 4: eine Illustration des Bremsrings und des Bremsscheibentopfs aus Fig. 3, in einem Schnitt senkrecht zur Achse;
- Fig. 5: eine Illustration eines Details einer Vorrichtung am Ende des Verfahrens, in einem achsenparallelen Schnitt;
- Fig. 5A: eine Illustration eines Details der Vorrichtung aus Fig. 5, in einem Schnitt senkrecht zur Achse, in Fig. 5 mittels Pfeil und "A" gekennzeichnet;
- Fig. 5B: eine Illustration eines Details der Vorrichtung aus Fig. 5, in einem Schnitt senkrecht zur Achse, in Fig. 5 mittels Pfeil und "B" gekennzeichnet;
- Fig. 6: eine Illustration eines Details einer Vorrichtung am Ende des Verfahrens, mit Prägewerkzeug mit Vorsprüngen, in einem achsenparallelen Schnitt;
- Fig. 6A: eine Illustration eines Details der Vorrichtung aus Fig. 6, in einem Schnitt senkrecht zur Achse, in Fig. 6 mittels Pfeil und "A" gekennzeichnet;
- Fig. 6B: eine Illustration eines Details der Vorrichtung aus Fig. 6, in einem Schnitt senkrecht zur Achse, in Fig. 6 mittels Pfeil und "B" gekennzeichnet;
- Fig. 7: eine Illustration eines Details einer Vorrichtung am Ende des Verfahrens, mit Einstich oder Ausnehmung im Bremsring, in einem achsenparallelen Schnitt;
- Fig. 7A: eine Illustration eines Details der Vorrichtung aus Fig. 7, in einem Schnitt senkrecht zur Achse, in Fig. 7 mittels Pfeil und "A" gekennzeichnet;
- Fig.7B: eine Illustration eines Details der Vorrichtung aus Fig. 7, in einem Schnitt senkrecht zur Achse, in Fig. 7 mittels Pfeil und "B" gekennzeichnet;
- Fig. 8A: eine Illustration eines Details eines Bremsrings mit eingeformten Bremsscheibentopf, in einem Schnitt senkrecht zur Achse;
- Fig. 8B: eine Prinzip-Illustration des Details gemäss Fig. 8A, bei erhitztem Bremsring;
- Fig. 9: eine Illustration eines Details eines Bremsrings mit eingeformten Bremsscheibentopf, in einem Schnitt senkrecht zur Achse;
- Fig. 10: eine Illustration eines Details eines Bremsrings mit eingeformten Bremsscheibentopf bei taillierter Profillücke, in einem Schnitt senkrecht zur Achse;
- Fig. 11: eine Illustration eines Details eines Bremsrings bei asymmetrischer Profillücke, in einem Schnitt senkrecht zur Achse.

Für das Verständnis der Erfindung nicht wesentliche Teile sind zum Teil nicht dargestellt. Die beschriebenen Ausführungsbeispiele stehen beispielhaft für den Erfindungsgegenstand und haben keine beschränkende Wirkung.

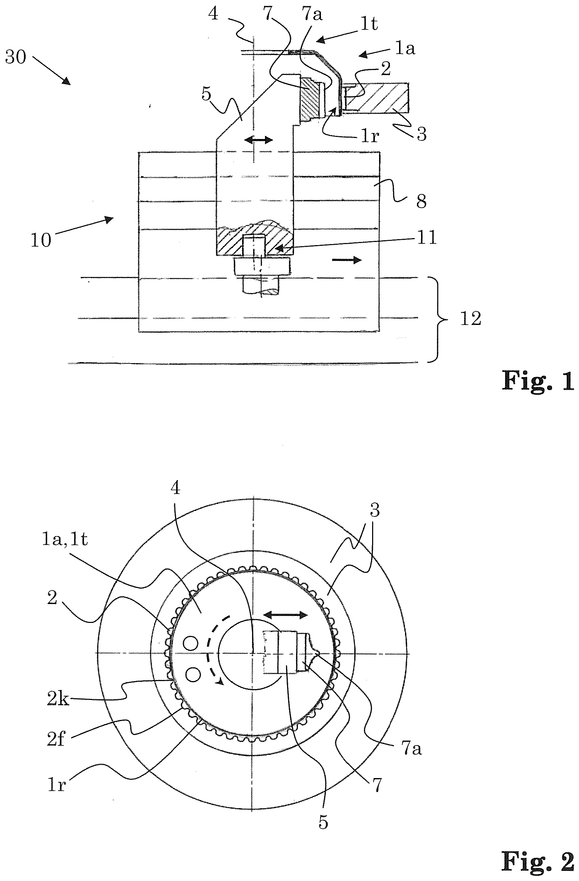

Fig. 1 illustriert in schematisierter Form Details einer Vorrichtung 30 für das Herstellen einer Verbundbremsscheibe mit einem Bremsring 3 und einem Bremsscheibentopf in einem Schnitt parallel zu einer Achse 4. Fig. 2 illustriert in schematisierter Form den Bremsring 3 und den Bremsscheibentopfrohling 1a aus Fig. 1, in einem Schnitt senkrecht zu der Achse 4.

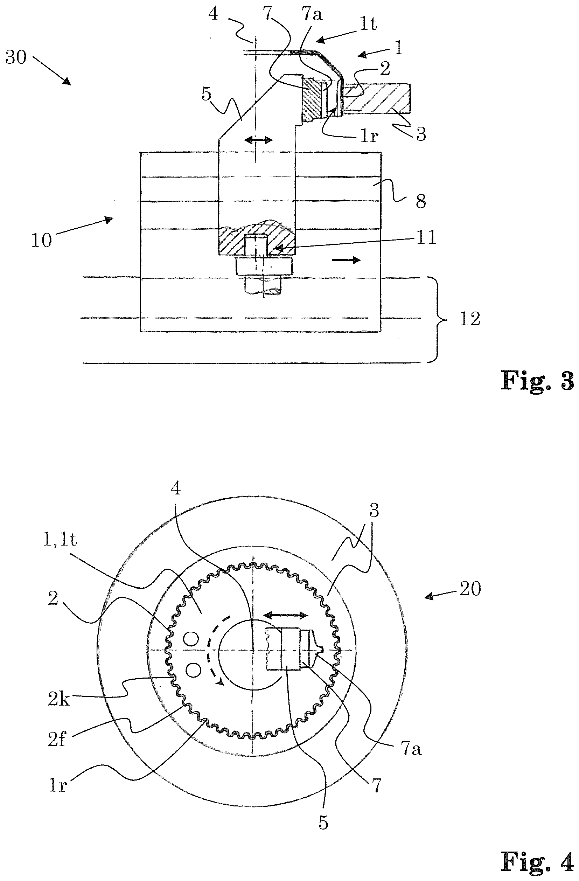

Figs. 1 und 2 illustrieren einen Zustand zu Beginn des Einformprozesses, also in einem Zustand, in dem der Bremsscheibentopfrohling noch nicht durch das Prägewerkzeug umgeformt ist, wohingegen Figs. 3 und 4 die gleiche Vorrichtung in gleicher Weise illustrieren, aber in einem Zustand am Ende des Einformprozesses, also in einem Zustand, in dem der Bremsscheibentopfrohling zu dem Bremsscheibentopf umgeformt ist.

Die Vorrichtung 30 dient dem Erstellen einer Verbundbremsscheibe 20 (siehe Fig. 4) aus einem Bremsring oder Reibring 3, welcher eine Innenprofilierung aufweist, die beispielsweise als eine Innenverzahnung 2 ausgebildet ist, und einem Bremsscheibentopfrohling 1a (Figs. 1, 2), welcher im Laufe des Verfahrens durch die Vorrichtung 30 zu einem Bremsscheibentopf 1 (Figs. 3, 4) umgearbeitet, umgeformt wird. Der Bremsscheibentopfrohling 1a und auch der Bremsscheibentopf 1 weisen einen rohrförmigen Abschnitt 1r und einen daran angrenzenden Bodenteil 1t auf, welchen einen gewinkelten Bereich aufweisen kann (Figs. 1 und 3) und mit Öffnungen versehen sein kann (Figs. 1 bis 4).

Der Bremsring 3 kann natürlich einen komplizierteren Aufbau aufweisen als in den mehr als Prinzipskizzen zu verstehenden Figuren, z.B. kann er ein komplizierteres beispielsweise asymmetrisches Profil aufweisen und ein innenbelüfteter Bremsring sein. In einer Vielzahl von mittels eines Prägewerkzeuges 7 ausgeführten Prägeschritten wird der Bremsscheibentopfrohling 1a in die Innenverzahnung 2 eingeformt. Der Bremsscheibentopfrohling 1a zu Beginn des Verfahrens kann, wie in Figs. 1 und 2 illustriert, einen nicht-profilierten, zylindrischen rohrförmigen Abschnitt lr aufweisen.

Das Prägewerkzeug 7 hat einen Wirkbereich 7a, mittels dessen der rohrförmige Abschnitt 1r periodisch hämmernd von innen bearbeitet werden kann. Im Bereich von Zahnfüssen 2f der Innenverzahnung 2 wird der Bremsscheibentopfrohling 1a plastisch umgeformt, so dass er dort radial nach aussen vorstehende Profilvorstände oder Zähne erhält. Das Prägewerkzeug 7 ist in einem Werkzeughalter 5 der Vorrichtung 30 gehalten.

Typischerweise wird der Bremsscheibentopfrohling 1a reihum in allen Zahnlückenbereichen 2f der Innenverzahnung 2 bearbeitet, wobei dies auch in mehreren aufeinanderfolgenden Umdrehungen des Werkstücks (Bremsring mit eingebrachtem Bremsscheibentopfrohling) so stattfinden kann, dass schliesslich jeder einem Zahnlückenbereich 2f benachbarte Bereich des Bremsscheibentopfrohlings 1a mehrfach mittels des Prägewerkzeuges 2 bearbeitet wird. Auf diese Weise wird einerseits das Einformen in verschiedene Bereiche (Zahnlückenbereich 2f) entlang des Umfangs der Innenverzahnung in mehrere nacheinander ausgeführte Teilschritte zerlegt, aber andererseits auch das Einformen (durch lokales Umformen) in jeden solchen Bereich in mehrere nacheinander ausgeführte Teilschritte zerlegt.

Das Verfahren wird z.B. wie folgt ausgeführt:
Der Bremsscheibentopfrohling 1a wird in den Bremsring 3 eingebracht, wofür gegebenenfalls eine Einbringvorrichtung verwendet werden kann, die Teil der Vorrichtung 30 sein kann. Z.B. kann ein Roboter als eine Einbringvorrichtung oder Teil derselben dienen.

Ein Werkstückhalter (in den Figuren nicht dargestellt) hält den Bremsring 3 mit dem darin eingebrachten Bremsscheibentopfrohling 1a (die zusammen das Werkstück bilden), wofür gegebenenfalls zwei Halter, einer für den Bremsring 3 und ein weiterer für den Bremsscheibentopfrohling 1a, vorgesehen sein können.

Das gehalterte Werkstück wird dann z.B. entlang der Achse 4 eingefahren, bis eine Zielposition erreicht ist, in der eine geeignete Position des Prägewerkzeuges 7 (oder genauer dessen Wirkbereichs 7a) relativ zu der Innenverzahnung 2 vorliegt. Im allgemeinen ist dann der Wirkbereich 7a solcherart parallel zur Achse 4 erstreckt, dass er sich mindestens über die Gesamterstreckung der Innenverzahnung 2 parallel zur Achse 4 erstreckt, insbesondere so, dass der Wirkbereich an beiden Enden der Innenverzahnung 2 noch einen Überstand hat.

Mithilfe einer Positionsbestimmungseinheit (oder zumindest mit Hilfe von Daten oder Signalen, welche diese ausgeben kann), in den Figuren nicht dargestellt, können Bremsring 3 und Werkzeughalter (und/oder Prägewerkzeug 7) zueinander rotationsmässig präzise ausgerichtet werden. Dazu kann die Positionsbestimmungseinheit beispielsweise einen optischen oder einen mechanischen Sensor aufweisen, mittels dessen die rotatorische Ausrichtung der Innenverzahnung 2, beispielsweise relativ zu einer Referenz, zum Beispiel zu der rotationsmässigen Ausrichtung des Prägewerkzeuges 7, bestimmt werden kann. Entsprechend kann dann das Werkstück oder zumindest der Bremsring 3 mittels eines Antriebes für die Rotation des Werkstückhalters in eine geeignete Anfangsposition gebracht werden, in welcher die Innenprofilierung 2 und Wirkbereich 7a in geeigneter Weise zueinander ausgerichtet sind.

Mittels des Antriebes für die Rotation des Werkstückhalters kann das Werkstück mit variierender Rotationsgeschwindigkeit um die Achse 4 rotiert werden, z.B. intermittierend, wie in Figs. 2 und 4 durch die gestrichelten Pfeile illustriert. In der Achse 4 fallen die Rotationsachse der Werkstückrotation und die Drehachse der zu erstellenden Verbundbremsscheibe, welche auch der Achse des Bremsrings und der Achse der Innenprofilierung entspricht, zusammen. Gleichzeitig führt das Prägewerkzeug 7 eine oszillierende Radialbewegung aus, wie in Figs. 1 und 3 durch die doppelseitigen Pfeile illustriert. Dazu kann der Werkzeughalter 5, der in einer Führung oder Führungsschiene 8 geführt ist, beispielsweise mittels eines Exzenterantriebes 11 in radiale Richtung (also senkrecht zur Achse 4) hin und her bewegt werden. Die Führung 8 kann in einem Schlitten 10 vorgesehen sein, der, ebenfalls radial beweglich, auf einer Führungsschiene 12 oder einem Maschinengestell der Vorrichtung 30 gelagert ist.

Die radial oszillierende Bewegung des Prägewerkzeuges 7 ist synchronisiert mit der Rotationsbewegung des Werkstückhalters, also mit der Rotationsbewegung des Bremsrings 3 mit eingebrachtem Bremsscheibentopfrohling 1a. Dazu kann eine in den Figuren nicht dargestellte Synchronisationsvorrichtung vorgesehen sein, die beispielsweise elektronisch oder mechanisch funktioniert. Insbesondere kann die Frequenz und Phase der radial oszillierenden Bewegung des Prägewerkzeuges 7 (relativ zur Frequenz und Phase der Werkstückrotation) so gewählt werden, dass das Prägewerkzeug zu solchen Zeiten radial maximal ausgelenkt ist, also mit dem Werkstück in Eingriff stehen kann, in denen die Rotationsbewegung des Werkstücks minimal ist bzw. das Werkstück stillsteht. Nach jedem solchen Prägeschritt kann das Werkstück dann beispielsweise so weit weiterrotiert werden, dass der nächste Eingriff im Bereich der nächsten, also der benachbarten, Zahnlücke stattfinden kann.

Der Wirkbereich 7a kann so ausgebildet sein, dass der Bereich, in welchem dieser mit dem Bremsscheibentopfrohling 1a in Kontakt kommt, zumindest am Ende des Einformenprozesses, also zumindest für den jeweils letzten Eingriff in die Profillücken, für Eingriffe bei benachbarten Profillücken der Innenverzahnung überlappend ist. Auf diese Weise können radial nach innen vorstehende Grate vermieden werden.

Es können also über den gesamten Umfang der Innenverzahnung 2 lokal Kaltumformungsschritte zum Einformen des Bremsscheibentopfrohlings 1a in jede Zahnlücke der Innenverzahnung 2 stattfinden.

Wie oben bereits erwähnt kann es weiter sinnvoll sein, nicht nur einen einzigen Prägeschritt pro Zahnlücke durchzuführen, sondern mehrere. Dazu kann eine radiale Zustellbewegung vorgesehen sein, welche durch eine radiale Bewegung des Schlittens 10 (radial nach aussen) realisiert wird, wie durch den einfachen Pfeil in Figs. 1 und 3 illustriert. Die Zustellbewegung kann z.B. kontinuierlich sein oder gegebenenfalls auch schrittweise erfolgen.

So kann der Bremsscheibentopfrohling 1a als Ganzes, aber eben auch lokal, z.B. bei jeder Zahnlücke der Innenprofiliernug 2, durch einen in mehrere Teilschritte, insbesondere Prägeschritte, aufgeteilten Einformungsprozess immer weiter in die Innenprofilierung 2 eingeformt werden. Es kann aber auch ausreichend sein, nicht mehr also nur einen einzigen Prägeschritt pro Zahnlücke vorzusehen und so z.B. das Einformen des Bremsscheibentopfrohlings in den Bremsring in einer einzigen Umdrehung der Werkstückrotation zu bewerkstelligen.

In Fig. 4 ist zu erkennen, dass der durch die Vielzahl von Prägeschritten aus dem Bremsscheibentopfrohling 1a entstandene Bremsscheibentopf 1 in die Innenverzahnung 2 eingeformt ist.

Da die Umformung des Bremsscheibentopfrohlings 1a zur Einformung in die Innenprofilierung des Bremsrings 3 im wesentlichen nur in radialer Richtung erfolgt, bleibt die axiale Länge des Bremsscheibentopfrohlings bzw. Bremsscheibentopfes zumindest im wesentlichen unverändert. Beim Einformen entsteht, falls überhaupt, nur eine geringfügige Verlängerung des Bremsscheibentopfrohlings bzw. Bremsscheibentopfes in axialer Richtung.

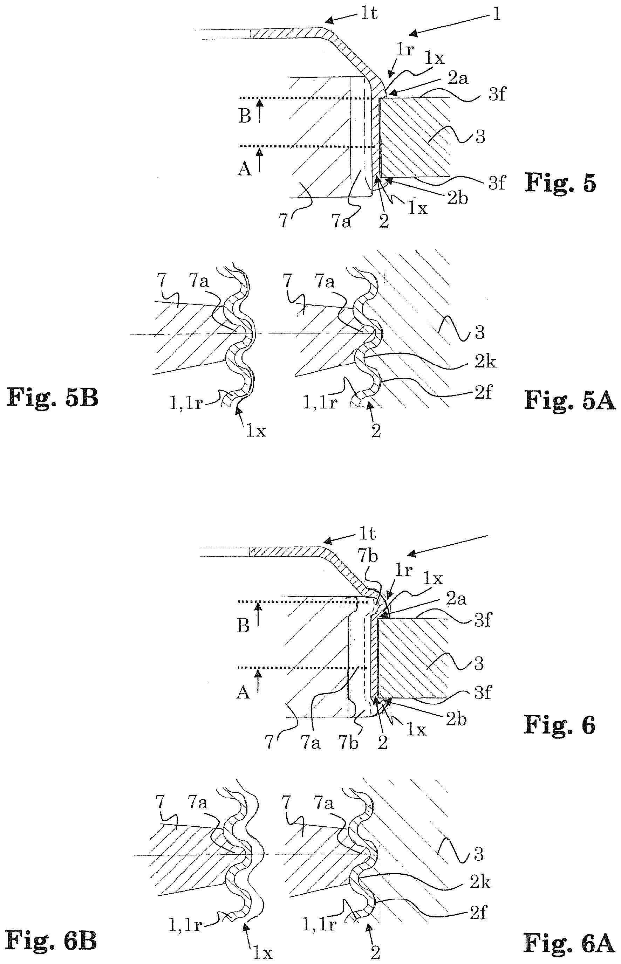

Fig. 5 ist eine schematisierte Illustration eines Details einer Vorrichtung 30 am Ende des Verfahrens, in einem Schnitt parallel zur Drehachse der Verbundbremsscheibe und der Rotationsachse der Werkstückrotation. Die Vorrichtung kann z.B. eine Vorrichtung 30 sein, wie in Figs. 1 bis 4 beschrieben. Figs. 5A und 5B sind schematisierte Illustrationen von Details der Vorrichtung aus Fig. 5, in einem Schnitt senkrecht zu der Achse, in Fig. 5 sind die Schnitte mittels Pfeil und "A" bzw. "B" gekennzeichnet.

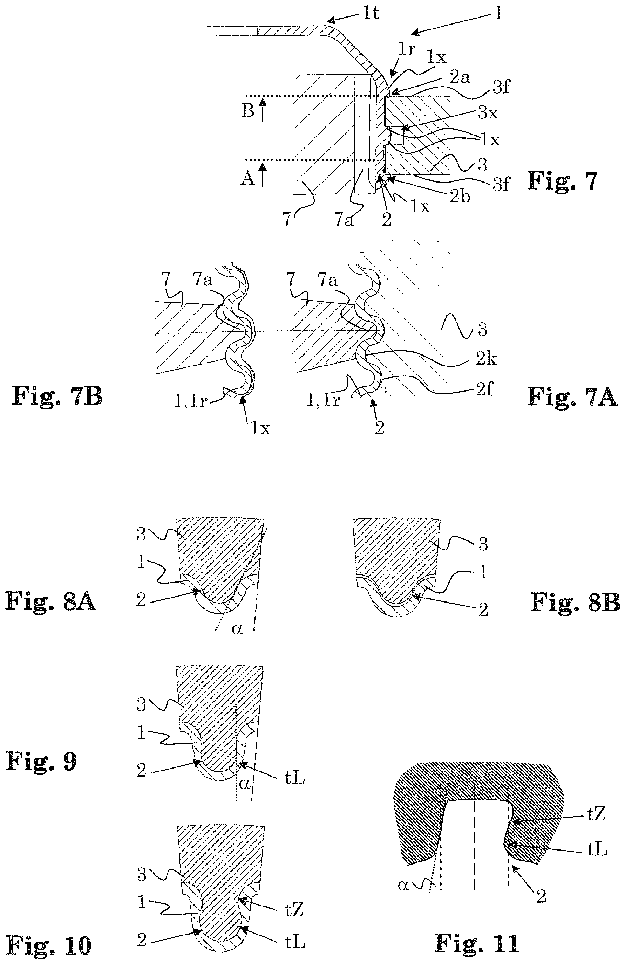

Mit Figs. 6, 6A und 6B sowie mit Figs. 7, 7A und 7B verhält es sich genau analog.

Es ist jeweils ein Zustand während des Eingriffs des Prägewerkzeugs 7 in dasWerkstück (aufweisend Bremsring 3 und Bremsscheibentopfrohling 1a bzw., am Ende des Verfahrens, Bremsscheibentopf 1) illustriert.

In Fig. 5 ist zu erkennen, dass sich der Wirkbereich 7a, parallel zur Achse 4 (in Fig. 5 senkrecht verlaufend, aber nicht dargestellt) beidseitig über die (ebenfalls achsenparallele) Erstreckung der Innenverzahnung 2 hinaus erstreckt. Die (axialen) Enden der Innenverzahnung 2 sind in Fig. 5 mit 2a, 2b bezeichnet.

Auf diese Weise kann bei geeigneter Wahl der Verfahrensparameter oder Umformparameter bewirkt werden, dass durch das Einformen des Bremsscheibentopfrohlings 1a in die Innenverzahnung 2 gleichzeitig auch noch Vorsprünge 1x des Bremsscheibentopfes 1 an den Enden 2a, 2b der Innenverzahnung 2 erzeugt werden. Diese Vorsprünge 1x stehen radial nach aussen vor. Sie überragen diejenigen Bereiche des Bremsscheibentopfes 1 radial, in denen der Bremsscheibentopf 1 in die Innenverzahnung 2 eingeformt ist.

Vorsprünge 1x können als Axialbegrenzungen dienen. Durch sie kann ein Herausschieben des Bremsscheibentopfes 1 aus dem Bremsring 3 (in axiale Richtung) verhindert werden. Diese Wirkung kann auch bei unterschiedlicher thermischer Ausdehnung oder mechanischer Belastung von Bremsring 3 und Bremsscheibentopf 1, wie sie bei Bremsvorgängen vorliegen kann, erhalten bleiben.

Durch die Vorsprünge 1x kann der Bremsscheibentopf 1 den Bremsring 3 über seinen gesamten Umfang nahe der Innenverzahnung 2 umgreifen. Dies kann kontinuierlich oder an einer Mehrzahl von über den Umfang der Innenverzahnung 2 verteilten Stellen der Fall sein.

Die Vorsprünge 1x können, wie aus Fig. 5B ersichtlich, ringförmig ausgebildet sein. Insbesondere können zwei solche ringartigen Vorsprünge 1x vorliegen, die jeweils an einem axialen Ende der Innenverzahnung 2 angeordnet sind.

Zum Beispiel kann ein Vorsprung 1x (typischerweise zwei Vorsprünge 1x) eine ringförmige Struktur bilden, durch welche eine Linie nachgebildet ist, die durch die Form der Innenverzahnung 2 an einer Stirnfläche 3f des Bremsrings 3 beschrieben ist.

Wie aus Fig. 5B ersichtlich kann diese Nachbildung dergestalt sein, dass die ringförmige Struktur gegenüber der genannten Linie radial nach aussen verschoben ist.

Es kann auch vorgesehen sein, ist aber in den Figuren nicht dargestellt, dass Vorsprünge 1x eine abschnittsweise entlang eines Rings vorhandene Struktur bilden, durch welche Abschnitte einer Linie nachgebildet sind, die durch die Form der Innenverzahnung 2 an einer Stirnfläche 3f des Bremsrings 3 beschrieben ist. Dies kann zum Beispiel der Fall sein, wenn Verfahrens- oder Umformparameter und insbesondere ein Profil des Prägewerkzeuges 7 so gewählt sind, dass Vorsprünge 1x nur im Bereich von Zahnköpfen 2k der Innenverzahnung 2, aber nicht an Zahnfüssen 2f der Innenverzahnung 2 erzeugt werden oder, andersherum, wenn Verfahrens- oder Umformparameter und insbesondere ein Profil des Prägewerkzeuges 7 so gewählt sind, dass Vorsprünge 1x nur im Bereich von Zahnfüssen 2f der Innenverzahnung 2, aber nicht an Zahnköpfen 2k der Innenverzahnung 2 erzeugt werden. In einem solchen Fall wird die Wirkung der Vorsprünge als Axialbegrenzung an einer Mehrzahl von typischerweise gleichmässig über den Umfang der Innenverzahnung 2 verteilten Vorsprüngen 1x erreicht. Pro Struktur können in diesem Fall insbesondere genau so viele Vorsprünge 1x vorhanden sein wie die Innenprofilierung Zähne (oder Zahnlücken) hat.

Wie in Fig. 5A angedeutet, kann das Einformen des Bremsscheibentopfrohlings 1a in die Innenverzahnung so erfolgen, dass im Bereich der Zahnlücken oder Zahnfüsse 2f ein Spalt zwischen Bremsscheibentopf 1 und Bremsring 3 verbleibt.

Wie in Figs. 5 und 5B zu erkennen, sind die Vorsprünge 1x wulstartig oder wulstförmig ausgebildet. Insbesondere weisen sie Bereiche auf, nämlich wo sie nahe den Enden 2a, 2b der Innenverzahnung 2 nicht am Bremsring 3 anliegen, in denen ihre Form durch freien Materialfluss bestimmt ist. Dort, wo die Vorsprünge 1x mit einer die Innenverzahnung 2 begrenzenden Stirnfläche 3f des Bremsrings 3 in Kontakt sind, sind sie der entsprechenden Fläche angeformt.

Insgesamt kann durch geeignete Wahl der Verfahrensparameter oder genauer der Umformparameter wie Zustelltiefe und Form des Wirkbereichs 7a bestimmt werden, ob und wieviel radiales Spiel vorhanden sein soll und, sofern gewünscht, wie gross eine Vorspannung zwischen Bremsscheibentopf 1 und Bremsring 3 sein soll. In dem beschriebenen Verfahren können diese Eigenschaften sehr gut kontrolliert und reproduziert werden.

Wie in Fig. 5 illustriert, können die Vorsprünge 1x beispielsweise mit einem Prägewerkzeug 7 erzeugt werden, das einen Wirkbereich 7a mit der Form einer Rippe aufweist, insbesondere einer Rippe, die parallel zur Achse 4 verläuft und parallel zur Achse 4 ein konstantes Profil hat.

Figs. 6, 6A, 6B illustrieren eine Möglichkeit, besonders stark ausgeprägte Vorsprünge 1x zu erzeugen. In diesem Fall wird ein Prägewerkzeug 7 mit einem Wirkbereich 7b eingesetzt, der Vorsprünge 7b aufweist. Die Vorsprünge 7b stehen radial nach aussen vor und sind in Bereichen angeordnet, die an den Enden (2a, 2b) und/oder ausserhalb der axialen Erstreckung der Innenverzahnung liegen.

Durch diese Vorsprünge 7b kann Material des Bremsscheibentopfrohlings 1a besonders weit radial nach aussen gedrängt werden, so dass die Vorsprünge 1x besonders weit über die Enden 2a, 2b Innenverzahnung 2 radial nach aussen überstehen, siehe auch Figs. 6 und 6B.

In Figs. 7, 7A und 7B ist illustriert, dass es während des Einformens des Bremsscheibentopfrohlings 1a in die Innenverzahnung 2 des Bremsrings 3 möglich ist, Axialbegrenzungen durch Vorsprünge 1x alternativ oder (wie illustriert) zusätzlich zwischen den Enden 2a, 2b der Innenverzahnung 2 zu erzeugen.

Beispielsweise kann ein Einstich 3x oder eine Ausnehmung im Bremsring 3, genauer in der Innenverzahnung 2, vorgesehen sein, in welchen das Material des Bremsscheibentopfrohlings 1a hineingedrängt werden kann. Je nach Form und Breite eines solchen Einstichs 3x oder einer Ausnehmung und deren Anzahl können so eine oder mehrere Vorsprünge 1x durch die Prägesschritte erzeugt werden, die wie oben beschrieben als Axialbegrenzung wirken können. Ausnehmungen oder entsprechende Flächen, mit denen zusammen die Vorsprünge 1x als Axialbegrenzungen wirken, können sich über den gesamten Umfang des Bremsrings 3 erstrecken oder über Teile davon, sie können insbesondere an einer Mehrzahl an über den Umfang des Bremsrings (typischerweise gleichmässig) verteilten Stellen vorgesehen sein, z.B. indem alle 20° ein Einstich vorgesehen ist.

Die Flächen des in Fig. 7 dargestellten Einstichs 3x, mit denen der mittlere Vorsprung 1x zusammenwirkt, sind parallel zu einer achsensenkrechten Ebene ausgerichtet und bilden (jeweils lokal) einen rechten Winkel mit einer Tangente an den Umfang der Innenverzahnung 2. Es ist aber auch möglich (in Fig. 7 nicht dargestellt), anders ausgerichtete sowie anders geformte Einstiche vorzusehen, z.B. kann ein Einstich Flächen aufweisen, die (jeweils lokal) mit einer Tangente an den Umfang der Innenverzahnung einen spitzen oder einen stumpfen Winkel einschliessen.

Die Figuren 8A bis 11 beziehen sich auf Ausgestaltungsmöglichkcitcn für die Innenprofilierung.

Um den Materialfluss beim Einformen des Bremsscheibentopfrohlings in die Innenprofilierung des Bremsringes möglichst wenig zu stören, kann, wie in den Figuren dargestellt, eine kantenfreie Profilform vorgesehen werden (zumindest in einem Schnitt senkrecht zur Achse der Verbundbremsscheibe).

Wie weiter oben bereits erwähnt, kann eine spielfreie und feste Passung zwischen Bremsring und Bremsscheibentopf durch das Vorsehen einer Vorspannung erreicht werden. Wie im folgenden erläutert wird, kann auch die Form der Innenprofilierung zu einer festen Passung zwischen Bremsring und Bremsscheibentopf beitragen.

Fig. 8A zeigt schematisch eine Illustration eines Details eines Bremsrings 3 mit eingeformtem Bremsscheibentopf 1, in einem Schnitt senkrecht zur Achse der Verbundbremsscheibe. Im Falle einer Profilform wie der in Fig. 8A gezeigten kann es bei starker Erhitzung des Bremsrings 3, also beispielsweise bei einem Bremsvorgang, zu einem nicht wünschenswerten Spiel zwischen Bremsring 3 und Bremsscheibentopf 1 kommen, unter anderem darum, weil der thermische Kontakt zwischen Bremsring 3 und Bremsscheibentopf 1 nicht gut ist. Eine Folge kann eine unzureichende Zentrierung von Bremsscheibentopf 1 in Bremsring 3 sein.

Fig. 8B zeigt eine Prinzip-Illustration des Details gemäss Fig. 8A, bei erhitztem Bremsring 3. Das erwähnte Spiel ist in Fig. 8B ersichtlich.

Durch eine geeignete Ausbildung der Imenprofilierung 2 kann das genannte Spiel klein gehalten oder auch ganz vermieden werden, und dies eben auch im Falle eines erhitzten Bremsrings 3. In Fig. 8A ist ein Flankenwinkel α eingezeichnet, der in dem illustrierten Beispiel 21° besträgt. Der Flankenwinkel α wird zwischen einer Tangente an die Flanke der Innenprofiliering (in einem Wendepunkt; oder gegebenenfalls in einem Wendepunktbereich), durch eine gepunktete Linie dargestellt, und diejenige Radialachse gebildet, die zentral durch die angrenzende Profilücke verläuft, durch eine gestrichelte Linie dargestellt. (Eine Radialachse ist eine Achse, die durch die Drehachse der Vcrbundbremsscheibe verläuft und in einer Ebene senkrecht zur Drehachse der Verbundbremsscheibe liegt.)

Mit kleiner werdendem Flankenwinkel α wird auch das im Bremsfall allenfalls vorliegende Spiel kleiner (oder verschwindet). Dies ist beispielsweise auch aus dem unten beschriebenen Fall α = 0° ersichtlich.

Fig. 9 zeigt eine Illustration eines Details eines Bremsrings 3 mit eingeformten Bremsscheibentopf 1, in einem Schnitt senkrecht zur Achse, wobei in diesem Fall der Flankenwinkel α kleiner als 0° ist. Er beträgt in dem Beispiel von Fig. 9 etwa -5.5° (vgl. den positiven Winkel im Falle von Fig. 8A). Da die Flanken im illustrierten Fall über eine gewisse Strecke gerade sind, kann man hier von einem Wendepunktbereich sprechen. Die gepunktete Linie verläuft entlang des Wendepunktbereichs. Die Profilvorsprünge oder Zähne der Innenprofilierung oder genauer die Flanken haben im Falle der Fig. 9 zueinander parallel Bereiche. Darum weisen aber die Profillücken eine Taille tL auf, so dass der Bremsscheibentopf in den Profillücken gehalten ist. Im Bereich jeder einzelnen entsprechend ausgebildeten Profillücke liegt auf diese Weise eine formschlüssige Verbindung zwischen dem entsprechenden Bereich des Bremsscheibentopfes und dem entsprechenden Bereich des Bremsrings vor.

Ein Herausschieben des Bremsscheibentopfprofilabschnittes in radialer Richtung aus einer derartigen Profillücke der Innenprofilierung bedingt einen Kraftaufwand für ein Verformen desselben. Somit kann ein stabiler Halt erreicht werden.

Die Flanken weisen mindestens einen Bereich auf, in welchem der Abstand der Flanke zu der zuvor genannten zentralen Radialachse (gestrichelte Linie in Fig. 9) mit zunehmendem Abstand von der Drehaschse zunimmt. Im Falle der Fig. 8A ist dies nicht der Fall. Dort nimmt der Abstand der Flanke zu der genannten zentralen Radialachse (gestrichelte Linie in Fig. 8A) mit zunehmendem Abstand zur Drehachse ab, so dass keine Verformungsarbeit gegen ein Herausschieben eines Bremsscheibentopfprofilabschnittes in radialer Richtung aus einer derartigen Profillücke der Innenprofilierung aufgewendet werden muss und auch im Bereich einzelner Profillücken keine formschlüssige Verbindung vorliegt.

Eine gute Passung zwischen Bremsring und Bremsscheibentopf mit verschwindendem oder zumindest geringem Spiel auch noch im Bremsfall ergibt sich nicht nur für negative Flankenwinkel a, sondern auch schon für α = 0°. Auch für Flankenwinkel bis α = 10° oder zumindest bis α = 5° kann das Spiel zwischen Bremsring und Bremsscheibentopf (auch im Bremsfall) ausreichend klein sein.

Eine besonders sichere Passung zwischen Bremsring und Bremsscheibentopf kann erreicht werden, wenn (aufgrund der entsprechenden Ausbildung der Innenprofilierung des Bremsrings) nicht nur radial nach aussen vorstehende Bremsscheibentopfprofilabschnitte in Profillücken der Innenprofilierung gehalten sind (siehe z.B. Fig. 9), sondern auch noch Profilvorsprünge (oder Zähne) der Innenprofilierung in radial nach innen ausbauchenden

Bremsscheibentopfprofilabschnitten gehalten sind. In einem solchen Fall weist die Innenprofilierung taillierte Profilvorsprünge (oder Zähne) auf. Nicht nur im Bereich jeder einzelnen entsprechend ausgebildeten Profillücke, sondern auch im Bereich jedes einzelnen entsprechend ausgebildeten Profilvorsprungs (oder Zahns) liegt auf diese Weise eine formschlüssige Verbindung zwischen dem entsprechenden Bereich des Bremsscheibentopfes und dem entsprechenden Bereich des Bremsrings vor.

Fig. 10 ist eine Illustration eines Details eines Bremsrings 3 mit eingeformten Bremsscheibentopf 1 mit einer Profillücke, die eine Taille tL aufweist, in einem Schnitt senkrecht zur Achse. Ausserdem weist im Beispiel vom Fig. 10 auch der angrenzende Profilvorsprung oder -zahn eine Taille tZ auf.

Auf diese Weise kann eine gegen thermische Effekte besonders stabile und spielfreie Passung zwischen Bremsring und Bremsscheibentopf erreicht werden. In einem solchen Fall gibt es Flankenbereiche mit negativem Flankenwinkel α und mindestens einen Punkt (oder, in entsprechenden Ausführungsbeispielen gegebenenfalls auch einen Bereich) mit α = 0°.

In den Figuren 8A bis 10 sind nur Innenprofilierungen mit symmetrischen Profillücken (und entsprechend symmetrischen Profilvorsprüngen oder -zähnen) dargestellt. Dabei bezieht sich die Symmetrie insbesondere auf eine Symmetrie in einer Schnittebene, die senkrecht auf der Drehaschse der Verbundbremsscheibe steht, bezüglich einer zentral durch die jeweilige Profillücke bzw. zentral durch den jeweiligen Profilvorsprung.

Eine entsprechende Symmetrie kann gegeben sein, muss aber nicht vorhanden sein. Und für die im Zusammenhang mit den Figuren 8A bis 10 diskutierten Wirkungen bezüglich einer verbesserten Passung zwischen Bremsring und Bremsscheibentopf bzw. deren verbessertem Verhalten bei Erhitzung des Bremsrings kann es ausreichend sein, wenn nur eine der zwei Flanken einer Profillücke eine der im Zusammenhang mit den Figuren 8A bis 10 diskutierten Eigenschaften hat.

Fig. 11 zeigt eine Illustration eines Details eines Bremsrings 3 bei asymmetrischer Profillücke, in einem Schnitt senkrecht zur Achse. Ein eingeformter Bremsscheibentopf ist in Fig. 11 nicht dargestellt. Im dargestellten Fall weist die in Fig. 11 links angeordnete Flanke einen Flankenwinkel von α = 10° auf. Und die rechts dargestellte Flanke weist eine Taille tL der Profillücke sowie eine Taille tZ des angrenzenden Profilvorsprungs auf.

Insbesondere in Fällen, in denen nur eine der zwei Flanken einer Profillücke eine der im Zusammenhang mit den Figuren 8A bis 10 diskutierten Eigenschaften hat, aber auch im Falle anderer asymmetrischer Profilierungen, kann es vorteilhaft für die Passung sein, wenn auch noch Profillücken vorgesehen sind, deren Profilform durch Spiegelung an der entsprechenden zentralen Radialachse hervorgehen. Beispielsweise können entlang des Umfangs abwechselnd die nicht-gespiegelten und die gespiegelten Profilformen vorgesehen sein.

Die oben geschilderten Wirkungen taillierter Profillücken ergeben sich zumindest zum Teil daraus, dass Material des Bremsscheibentopfrohlings beim Einformen in die Innenprofilierung bis an die Flanken gebracht wird, siehe Figs. 9 und 10. Bei gleichzeitigem Vorliegen einer Taille tZ, siehe Fig. 10, kann Material des Bremsscheibentopfrohlings beim Einformen sogar in die entsprechende Taille der angrenzenden Profillücke gebracht werden. Dazu können Prägewerkzeuge mit konischen (untaillierten) Wirkbereichen verwendet werden. Eine entsprechende Wahl von Verfahrensparameters kann derartige Materialflüsse ermöglichen. Entsprechend können ausbauchende Profilierungen des Bremsscheibentopfs erstellt werden, wie sie zum Beispiel in Figs. 9 und 10 dargestellt sind.

Mittels des beschriebenen Verfahrens und der beschriebenen Vorrichtung können in hoher Präzision und auf wirtschaftliche Weise Verbundbremsscheiben hoher Qualität mit wählbaren Eigenschaften hergestellt werden. Die Verbundbremsscheiben können für Räder und in verschiedenen Fahrzeugen, insbesondere in Kraftfahrzeugen, zum Beispiel in Automobilen, eingesetzt werden.

## Patentansprüche

1. Verfahren zur Herstellung einer Verbundbremsscheibe (20) aufweisend einen Bremsscheibentopf (1) und einen Bremsring (3), der eine Innenprofilierung (2) aufweist, wobei ein in den Bremsring (3) eingebrachter Bremsscheibentopfrohling (1a) mittels mindestens eines Prägewerkzeugs (7) in die Innenprofilierung (2) eingeformt wird, **dadurch gekennzeichnet,**
**dass** der Bremsring (3) zusammen mit dem eingebrachten Bremsscheibentopfrohling (1a) eine Rotationsbewegung mit zeitlich variierender Rotationsgeschwindigkeit um eine Drehachse (4) der Verbundbremsscheibe (20) durchführt und das mindestens eine Prägewerkzeug (7) radial oszillierende Bewegungen durchführt, die mit der genannten Rotationsbewegung synchronisiert sind, so dass das mindestens eine Prägewerkzeug (7) den Bremsscheibentopfrohling (1a) wiederholt, insbesondere periodisch bearbeitet.

2. Verfahren gemäss Anspruch 1, wobei das Einformen ein Hintereinanderausführen einer Mehrzahl von Prägeschritten im Bereich verschiedener Profillücken (2f), insbesondere Zahnlücken (2f), der Innenprofilierung (2) beinhaltet.

3. Verfahren gemäss Anspruch 1 oder 2, wobei das Einformen mindestens zwei, insbesondere mindestens drei Prägeschritte im Bereich jeder Zahnlücke (2f) der Innenprofilierung (2) beinhaltet.

4. Verfahren gemäss einem der Ansprüch 1 bis 3, wobei das mindestens eine Prägewerkzeug (7) den Bremsscheibentopfrohling (1a) in solchen Phasen der Rotationsbewegung bearbeitet, in denen Bremsring (3) und eingebrachter Bremsscheibentopfrohling (1a) zumindest momentan stillstehen, insbesondere wobei die Rotationsbewegung eine intermittierende Rotation ist, und wobei das mindestens eine Prägewerkzeug (7) den Bremsscheibentopfrohling (1a) in Phasen des Rotationsstillstandes von Bremsring (3) und eingebrachtem Bremsscheibentopfrohling (1a) bearbeitet.

5. Verfahren gemäss einem der Ansprüche 1 bis 4, wobei der Bremsscheibentopfrohling (la) vor dem Einbringen in den Bremsring (3) unprofiliert, insbesondere unverzahnt ist.

6. Verfahren gemäss einem der Ansprüche 1 bis 5, wobei die Innenprofilierung (2) Profillücken (2f) aufweist, die tailliert sind und/oder jeweils durch mindestens eine solche Profilflanke begrenzt sind, die einen Abschnitt oder eine Stelle aufweist, wo sie innerhalb von 10°, insbesondere innerhalb von 5°, zu einer zentral durch die jeweilige Profilücke (2f) verlaufende Radialachse parallel verlaufend ist.

7. Verfahren gemäss einem der Ansprüche 1 bis 6, wobei mittels des mindestens einen Prägewerkzeugs (7) während des Einformens mindestens ein nach aussen gerichteter Vorsprung (1x), insbesondere mindestens zwei nach aussen gerichtete Vorsprünge (1x), zur gegenseitigen axialen Fixierung von Bremsring (3) und Bremsscheibentopf (1) am Bremsscheibentopf (1) ausgebildet wird.

8. Verfahren gemäss Anspruch 7, wobei der mindestens eine Vorsprung (1x) durch Umformungen des Bremsscheibentopfrohlings (1a) erzeugt wird, die durch Prägesschritte bewirkt werden, durch welche auch Umformungen des Bremsscheibentopfrohlings (1a) zum Erreichen des Einformens bewirkt werden.

9. Verfahren gemäss Anspruch 7 oder Anspruch 8, wobei mindestens zwei Vorsprünge (1x) gebildet werden, wobei mindestens einer der Vorsprünge (1x) an einem axialen Ende der Innenprofilierung (2) und mindestens ein anderer der Vorsprünge (1x) an einem anderen axialen Ende der Innenprofilierung (2) gebildet wird.

10. Vorrichtung zur Herstellung einer Verbundbremsscheibe (20), die einen Bremsscheibentopf (1) und einen eine Innenprofilierung (2) aufweisenden Bremsring (3) aufweist, wobei mittels der Vorrichtung der Bremsscheibentopf (1) durch Umformen eines Bremsscheibentopfrohlings (1a) erstellbar ist und der Bremsscheibentopfrohling (1a) einen rohrförmigen Abschnitt (1r) aufweist, wobei die Vorrichtung aufweist:
- einen um seine Längsachse (4) rotierbaren Werkstückhalter zur Halterung des Bremsringes (3), in den der Bremsscheibentopfrohling (1a) eingebracht ist, so dass sich der rohrförmige Abschnitt innerhalb der Innenprofilierung (2) befindet, derart, dass der rohrförmige Abschnitt (1r) an seiner Innenseite bearbeitbar ist;
- einen Antrieb für die Rotation des Werkstückhalters, der ausgelegt ist zur Erzeugung einer Rotation mit zeitlich variierender Rotationsgeschwindigkeit, insbesondere einer intermittierenden Rotation;
- einen Werkzeughalter (5) zum Halten mindestens eines Prägewerkzeuges (7), der zum Durchführen einer radial zu der Längsachse (4) verlaufenden linear oszillierenden Bewegung antreibbar ist, so dass der rohrförmige Abschnitt (1r) an seiner Innenseite durch das mindestens eine Prägewerkzeug (7) wiederholt, insbesondere periodisch bearbeitbar ist;
- eine Synchronisationsvorrichtung zur Synchronisation einer mittels des Antriebs erzeugbaren Rotation des Werkstückhalters mit der radial zu der Längsachse (4) verlaufenden linear oszillierenden Bewegung des Werkzeughalters (5).

11. Vorrichtung gemäss Anspruch 10, aufweisend eine Positionsbestimmungseinheit zur Bestimmung einer relativen rotatorischen Positionierung von Bremsring (3) und Werkzeughalter oder Bremsring (3) und Prägewerkzeug (7).

12. Vorrichtung gemäss Anspruch 10 oder Anspruch 11, aufweisend eine Einbringvorrichtung zum Einbringen des Bremsscheibentopfrohlings (1a) in den Bremsring (3).

13. Verfahren zur Herstellung eines Rades für ein Fahrzeug, wobei das Rad eine Verbundbremsscheibe (20) aufweist, und wobei die Verbundbremsscheibe (20) durch ein Verfahren gemäss einem der Ansprüche 1 bis 9 hergestellt wird.

## Claims

1. A method for manufacturing a composite brake disc (20) comprising a brake disc chamber and a friction ring (3) having an inner profiling (2), wherein a brake disc chamber blank (1a) which is introduced into the friction ring (3) is formed into the inner profiling (2) by means of at least one embossing tool (7),
characteried in that
the friction ring (3) together with the introduced brake disc chamber blank (la) carries out a rotation movement with a temporally varying rotation speed about a rotation axis (4) of the composite brake disc (20), and the at least one embossing tool (7) carries out radially oscillating movements which are synchronised with said rotation movement, so that the at least one embossing tool (7) repeatedly, in particularly periodically machines the brake disc chamber blank (1a).

2. The method according to claim 1, wherein the forming-in comprises a successive implementation of a plurality of embossing steps in the region of different profile gaps (2f), in particular tooth gaps (2f), of the inner profiling (2).

3. The method according to claim 1 or claim 2, wherein the forming-in comprises at least two, in particular at least three embossing steps in the region of each tooth gap (2f) of the inner profiling (2).

4. The method according to one of claim 1 to 3, wherein the at least one embossing tool (7) machines the brake disc chamber blank (1a) in those phases of the rotation movement, in which the friction ring (3) and the introduced brake disc chamber stand still at least momentarily, in particular wherein the rotation movement is an intermittent rotation, and wherein the at least one embossing tool (7) machines the brake disc chamber blank (1a) in phases of the rotation standstill of the friction ring (3) and the introduced brake disc chamber blank (1a).

5. The method according to one of the claims 1 to 4, wherein the brake disc chamber blank (1a) is non-profiled, in particular is non-toothed, before the introduction into the friction ring (3).

6. The method according to one of the claims 1 to 5, wherein the inner profiling (2) comprises profile gaps (2f), which are waisted and/or which are delimited each by means of at least one profile flank which has a section or location, where it runs parallel within 10°, in particular within 5°, to a radial axis running centrally through the respective profile gap (2f).

7. The method according to one of the claims 1 to 6, wherein at least one outwardly directed projection (1x), in particular at least two outwardly directed projections (1x), for a mutual axial fixation of the friction ring (3) and brake disc chamber (1) are formed on the brake disc chamber (1) by means of the at least one embossing tool (7) during the forming-in.

8. The method according to claim 7, wherein the at least one projection (1x) is produced by reshapings of the brake disc chamber blank (1a), which are effected by embossing steps by means of which also reshapings of the brake disc chamber blank (1a) are effected for effecting the forming-in.

9. The method according to claim 7 or claim 8, wherein at least two projections (1x) are formed, wherein at least one of the projections (1x) is formed on an axial end of the inner profiling (2), and at least one other of the projections (1x) is formed on another axial end of the inner profiling (2).

10. An apparatus for manufacturing a composite brake disc (20) comprising a brake disc chamber and a friction ring (3) having an inner profiling (2), wherein the brake disc chamber (1) is producible by reshaping a brake disc chamber blank (1a) by means of the apparatus, and the brake disc chamber blank (1a) has a tubular section (1r), wherein the apparatus comprises:
- a workpiece holder rotatable about its longitudinal axis (4), for holding the friction ring (3), into which the brake disc chamber blank (1a) is introduced, so that the tubular section (1r) is located within the inner profiling (2), in a manner such that the tubular section (1r) can be machined on its inner side;
- a drive for the rotation of the workpiece holder, which is designed for producing a rotation with a temporally varying rotation speed, in particular an intermittent rotation;
- a tool holder (5) for holding at least one embossing tool (7), said tool holder (5) being drivable for carrying out a linearly oscillating movement running radially to the longitudinal axis (4), so that the tubular section (1r) on its inner side can be repeatedly, in particular periodically machined by means of the at least one embossing tool (7);
- a synchronisation device for synchronising a rotation of the workpiece holder which is producible by means of the drive, with the linearly oscillating movement of the tool holder (5) which runs radially to the longitudinal axis.

11. The apparatus according to claim 10, comprising a position-determining unit for determining a relative rotatory positioning of the friction ring (3) and the tool holder or of the friction ring (3) and the embossing tool (7).

12. The apparatus according to claim 10 or claim 11, comprising an introduction device for introducing the brake disc chamber blank (1a) into the friction ring (3).

13. A method for the manufacture of a wheel for a vehicle, wherein the wheel comprises a composite brake disc (20), and wherein the composite brake disc (20) is manufactured by means of a method according to one of the claims 1 to 9.

## Revendications

1. Procédé de fabrication d'un disque de frein composite (20) présentant une douille (1) de disque de frein et un anneau de frein (3) qui présente une profilation intérieure (2),
une ébauche (la) de douille de disque de frein insérée dans l'anneau de frein (3) étant façonnée dans la profilation intérieure (2) au moyen d'un ou de plusieurs outils d'emboutissage (7),
**caractérisé en ce que**
l'anneau de frein (3) exécute autour d'un axe de rotation (4) du disque de frein composite (20) conjointement avec l'ébauche (1a) de douille de disque de frein qui y a été insérée, un déplacement de rotation dont la vitesse varie dans le temps et **en ce que** le ou les outils d'emboutissage (7) exécutent des déplacements oscillant radialement et synchronisés par rapport audit déplacement de rotation, de telle sorte que le ou les outils d'emboutissage (7) usinent l'ébauche (1a) de douille de disque de frein de manière répétée, et en particulier de manière périodique.

2. Procédé selon la revendication 1, dans lequel le façonnage comporte l'exécution successive de plusieurs étapes d'emboutissage dans la région de différents interstices (2f) de profile, en particulier des interstices (2f) entre dents de la profilation intérieure (2).

3. Procédé selon les revendications 1 ou 2, dans lequel le façonnage comporte au moins deux et en particulier au moins trois étapes d'emboutissage dans la région de chaque interstice (2f) entre dents de la profilation intérieure (2).

4. Procédé selon l'une des revendications 1 à 3, dans lequel le ou les outils d'emboutissage (7) usinent l'ébauche (1a) de douille de disque de frein lors des phases du déplacement de rotation dans lesquelles l'anneau de frein (3) et l'ébauche (1a) de douille de disque de frein qui y a été insérée sont au moins momentanément à l'arrêt, et en particulier dans lequel le déplacement de rotation est une rotation intermittente, le ou les outils d'emboutissage (7) usinant l'ébauche (1a) de douille de disque de frein lors des phases d'arrêt de l'anneau de frein (3) et de l'ébauche (1a) de douille de disque de frein qui y a été insérée.

5. Procédé selon l'une des revendications 1 à 4, dans lequel avant son insertion dans l'anneau de frein (3), l'ébauche (1a) de douille de disque de frein n'est pas profilée et en particulier n'est pas dentée.

6. Procédé selon l'une des revendications 1 à 5, dans lequel la profilation intérieure (2) présente des interstice (2f) de profile qui sont cintrés et/ou qui sont délimités chacun par au moins un flanc de profile qui présente une section ou un emplacement dans lesquels il forme un angle inférieur ou égal à 10° et en particulier à 5° par rapport à une parallèle à un axe radial qui s'étend centralement dans l'interstice (2f) de profile.

7. Procédé selon l'une des revendications 1 à 6, dans lequel pendant le façonnage, le ou les outils d'emboutissage (7) forment sur l'ébauche (la) de douille de disque de frein au moins une saillie (1x) orientée vers l'extérieur, en particulier deux saillies (1x) orientées vers l'extérieur, pour une fixation axiale mutuelle de l'anneau de frein (3) et de la douille (1) de disque de frein.

8. Procédé selon la revendication 7, dans lequel la ou les saillies (1x) sont réalisées par déformation de l'ébauche (1a) de douille de disque de frein obtenue au moyen des étapes de façonnage par lesquelles des déformations de l'ébauche (1a) de douille de disque de frein sont également réalisées pour obtenir le façonnage.

9. Procédé selon la revendication 7 ou la revendication 8, dans lequel au moins deux saillies (1x) sont formées, au moins l'une des saillies (1x) étant formée à une extrémité axiale de la profilation intérieure (2) et l'autre saillie (1x) sur l'autre extrémité axiale de la profilation intérieure (2).

10. Dispositif pour la fabrication d'un disque de frein composite (20) présentant une douille (1) de disque de frein et un anneau de frein (3) qui présente une profilation intérieure (2),
la douille (1) de disque de frein pouvant être réalisée par déformation d'une ébauche (1a) de douille de disque de frein au moyen u dispositif et l'ébauche (1a) de douille de disque de frein présentant une section (1r) de forme tubulaire,
l'ensemble présentant :
- un porte-pièce apte à tourner autour de son axe longitudinal (4) et servant à tenir l'anneau de frein (3) dans lequel l'ébauche (1a) de douille de disque de frein est insérée de telle sorte que la section de forme tubulaire soit située à l'intérieur de la profilation intérieure (2) et que le côté intérieur de la section (1r) de forme tubulaire puisse être usiné,
- un entraînement permettant la mise en rotation du porte-pièce et conçu pour former une rotation dont la vitesse varie dans le temps, en particulier une rotation intermittente,
- un porte-outil (5) servant à tenir un ou plusieurs outils d'emboutissage (7) qui peuvent être entraînés de manière à exécuter un déplacement linéaire oscillant qui s'étend radialement par rapport à l'axe longitudinal (4), de telle sorte que le côté intérieur de la section (1r) de forme tubulaire puisse être usinée par le ou les outils d'emboutissage (7) de manière répétée et en particulier de manière périodique, et
- un dispositif de synchronisation qui synchronise par rapport au déplacement linéaire oscillant qui s'étend radialement par rapport à l'axe longitudinal (4) la rotation du porte-pièce formée au moyen de l'entraînement.

11. Dispositif selon la revendication 10, présentant une unité de détermination de position servant à déterminer une position de rotation relative entre l'anneau de frein (3) et le porte-outil ou entre l'anneau de frein (3) et l'outil d'emboutissage (7).

12. Dispositif selon la revendication 10 ou la revendication 11, présentant un dispositif d'insertion servant à insérer l'ébauche (1a) de douille de disque de frein dans l'anneau de frein (3).

13. Procédé de fabrication d'une roue de véhicule, la roue présentant un disque de frein composite (20), le disque de frein composite (20) ayant été fabriqué par un procédé selon l'une des revendications 1 à 9.
